# EUROPEAN PATENT APPLICATION

(11) **EP 4 793 296 A1**
(43) Date of publication of application: **19.08.2026**
(21) Application number: 24877219.6
(22) Date of filing: 09.10.2024
(51) Int. Cl.: C08F 2/04, C08F 2/01, C08F 220/18, C08L 101/00

(54) **METHOD FOR PRODUCING POLYMER**

(30) Priority: 10.10.2023 JP 2023175271
(71) Applicant: Daicel Corporation, Osaka-shi, Osaka 530-0011 (JP)
(72) Inventor: KITAMORI, Takehiko, Hsinchu City, 30013 (TW); SHIMIZU, Hisashi, Kawasaki-shi, Kanagawa 212-0032 (JP); TANAKA, Adelina, Kawasaki-shi, Kanagawa 212-0032 (JP); IIYAMA, Takashi, Tokyo 108-8230 (JP); ARATANI, Takahiro, Tokyo 108-8230 (JP); MORI, Atsushi, Tokyo 108-8230 (JP)
(74) Representative: Hoffmann Eitle
(86) International application number: PCT/JP2024/036203
(87) International publication number: WO 2025/079624

(57) **Abstract**

A method for producing a polymer, the method including a polymerization step including a polymerization treatment of subjecting a polymerization initiator and a monomer to a polymerization reaction in a liquid to yield a polymerization reaction product, and an additional polymerization step of adding an additive component to cause an additional polymerization reaction, the additional polymerization step being performed at least once, wherein the additive component includes at least one selected from the group consisting of a monomer and a polymerization initiator, and addition of the additive component is performed while controlling an addition amount of the additive component.

## Description

### Technical Field

The present disclosure relates to a method for producing a polymer.

### Background Art

In general, in production of a polymer using a polymerization reaction, a monomer is polymerized in the presence of a polymerization initiator. Examples of the method for polymerizing a monomer include a batch polymerization in which a polymerization initiator and all the monomers as raw materials are dissolved in a solvent, and the obtained solution is heated to perform polymerization in a batchwise manner.

However, in the batch polymerization, it is difficult to control the reaction conditions in accordance with the progress of the reaction. For example, the batch polymerization has a disadvantage that a difference occurs, for example, in the action of the initiator with respect to the monomers due to a subtle change in the reaction conditions, and variation occurs in properties such as molecular weight distribution of the resulting polymer. The difficulty in controlling the reaction conditions also leads to lotto-lot variations in quality.

As one means for solving these problems, for example, there is a method in which a monomer and a polymerization initiator are mixed or separately supplied into a system maintained at a temperature to cause polymerization, a so-called dropwise polymerization (semibatch polymerization). Known examples of the dropwise polymerization include a method including preheating a monomer and adding the preheated monomer dropwise, and a method of adding a monomer into a polymerization solvent maintained at a constant temperature (Patent Documents 1 and 2).

The dropwise polymerization, because of its smaller reaction system than that of the batch polymerization, readily facilitates control of the component ratio in the reaction system, and thus is effective to yield a uniform polymer.

However, in the dropwise polymerization, it is difficult to control the reaction conditions such as a reaction temperature, and further improvement has been expected from the viewpoint of controlling the uniformity of the polymer.

In view of this problem, Patent Document 3 discloses a technique for controlling the uniformity (in particular, molecular weight distribution) of a resulting polymer by using a microreactor including a first introduction port for introducing a monomer component and another introduction port positioned downstream of the first introduction port, the microreactor enabling introduction of the monomer component into the first introduction port and the another introduction port.

### Citation List

### Patent Document

Patent Document 1: JP 2004-269855 A
Patent Document 2: JP 2004-355023 A
Patent Document 3: JP 2020-029518 A

### Summary of Invention

### Technical Problem

Various means have been considered for controlling the uniformity of polymers, in particular, the molecular weight distribution of polymers. In recent years, development using a reactor as disclosed in Patent Document 1 has been conducted in which a monomer as a raw material is separately introduced into a reaction system to perform a polymerization reaction. However, the limitation of the structure of the reactor is not preferable from the viewpoint that it is difficult to flexibly respond to the change in the production environment. Thus, a method for more easily controlling the molecular weight distribution of polymers has been required.

An object of the present disclosure is to provide a method for producing a polymer, the method enabling easy control of the molecular weight distribution of the polymer.

### Solution to Problem

As a result of intensive studies, the inventors of the present invention have found that in a method for polymerizing a monomer in the presence of a polymerization initiator with addition of at least one additive component selected from the group consisting of a monomer and a polymerization initiator, the above problems can be solved by adding the additive component while controlling the addition amount of the additive component, and have reached the invention according to the present disclosure.

That is, an overview of the present disclosure is as described below.

### Aspect 1

Aspect 1 according to the present disclosure is a method for producing a polymer, the method including:
a polymerization step including a polymerization treatment of subjecting a polymerization initiator and a monomer to a polymerization reaction in a liquid to yield a polymerization reaction product; and
an additional polymerization step of adding an additive component to cause an additional polymerization reaction, the additional polymerization step being performed at least once,
wherein
the additive component includes at least one selected from the group consisting of a monomer and a polymerization initiator, and
addition of the additive component is performed while controlling an addition amount of the additive component.

### Aspect 2

In Aspect 1, the addition amount of the additive component may be on a molar basis.

### Aspect 3

In Aspect 1 or 2, when the additional polymerization step is performed n times (where, n is 1 or more), the k-th (where, k is 1 or more and n or less) additional polymerization step may be performed by treating the liquid containing the polymerization reaction product obtained in the polymerization step (when k equals 1) or the liquid containing the polymerization reaction product obtained in the (k - 1)-th additional polymerization step (when k is 2 or more), and
the addition of the additive component in the k-th additional polymerization step may be performed while controlling Mₖᵢ, Mₖₐ, M_{kf}, Iₖᵢ, Iₖₐ, and I_{kf} shown below:
Mₖᵢ: a total amount in moles of the monomer contained in the liquid at the start of the k-th additional polymerization step;
Mₖₐ: a total amount in moles of the monomer added in the k-th additional polymerization step;
M_{kf}: a total amount in moles of the monomer contained in the liquid at the end of the k-th additional polymerization step;
Iₖᵢ: a total amount in moles of the polymerization initiator contained in the liquid at the start of the k-th additional polymerization step;
Iₖₐ: a total amount in moles of the polymerization initiator added in the k-th additional polymerization step; and
I_{kf}: a total amount in moles of the polymerization initiator contained in the liquid at the end of the k-th additional polymerization step;
where the sum of Mₖₐ and Iₖₐ is not 0 mol, Mₖₐ is 0 mol or more, and Iₖₐ is 0 mol or more.

### Aspect 4

In Aspect 3, in the additional polymerization step, the addition of the additive component in the k-th additional polymerization step may be performed while further controlling M represented by Formula M shown below using Mₖᵢ, Mₖₐ, and M_{kf}: $M = {M}_{ki} + {M}_{ka} - {M}_{kf} .$

### Aspect 5

In Aspect 3 or 4, in the additional polymerization step, the addition of the additive component in the k-th additional polymerization step may be performed while further controlling I represented by Formula I shown below using Iₖᵢ, Iₖₐ, and I_{kf}: $I = {I}_{ki} + {I}_{ka} - {I}_{kf} .$

### Aspect 6

In any one of Aspects 3 to 5, in the additional polymerization step, the addition of the additive component in the k-th additional polymerization step may be performed while further controlling a ratio R represented by Formula R using M represented by Formula M shown below and I represented by the Formula I shown below: $R = M / I$ $M = {M}_{ki} + {M}_{ka} - {M}_{kf}$ $I = {I}_{ki} + {I}_{ka} - {I}_{kf} .$

### Aspect 7

In Aspect 6, in the additional polymerization step, the ratio R may be controlled to satisfy Condition (1) shown below:
Condition (1): a dispersity σ² calculated from Formula σ² shown below is 300 or less,
[Math. 1] ${σ}^{2} = \frac{1}{n} {\sum }_{i = 1}^{n} {\left({x}_{i}-{x}^{˜}\right)}^{2}$
*xᵢ* : Ratio R in i-th additional polymerization step
*x̃* : Average value of ratio R in respective additional polymerization steps up to n-th additional polymerization step.

### Aspect 8

In any one of Aspects 1 to 7, at least two types of monomers may be used as the monomer used in the polymerization step.

### Aspect 9

In any one of Aspects 1 to 8, at least one monomer selected from the group consisting of a (meth)acryloyl group-containing polymerizable monomer, an isocyanate group-containing polymerizable monomer, a carboxyl group-containing polymerizable monomer, a hydroxyl group-containing polymerizable monomer, an epoxy group-containing polymerizable monomer, an oxazoline group-containing polymerizable monomer, a maleimide group-containing polymerizable monomer, an amino group-containing polymerizable monomer, a styrene-based monomer, a fluorine-containing vinyl monomer, a silicon-containing vinyl-based monomer, a vinyl ester-based monomer, a diene-based monomer, vinyl chloride, vinylidene chloride, allyl chloride, and vinyl ethyl ether may be used as the monomer used in the polymerization step.

### Aspect 10

In any one of Aspects 1 to 9, when the monomer is added as the additive component in any of the additional polymerization steps up to the n-th polymerization step, the type of the monomer in any of the additional polymerization steps and the type of the monomer used in the polymerization step may at least partially overlap with each other.

### Aspect 11

In any one of Aspects 1 to 10, when the polymerization initiator is added as the additive component in any of the additional polymerization steps up to the n-th additional polymerization step, the polymerization initiator in any of the additional polymerization steps and the polymerization initiator used in the polymerization step may be radical polymerization initiators.

### Aspect 12

In any one of Aspects 1 to 11, at least one step selected from the group consisting of the polymerization step and the additional polymerization step, the additional polymerization step being performed at least once, may be performed using a vessel including a reaction flow path for allowing the polymerization reaction of the monomer to proceed.

### Aspect 13

In Aspect 12, the vessel may be a microfluidic reactor, and the reaction flow path may be a micro flow path.

### Aspect 14

Aspect 14 according to the present disclosure is a method for producing a composition, the method including yielding the composition using the polymer produced by the method for producing a polymer described in any one of Aspects 1 to 13.

### Aspect 15

Aspect 15 according to the present disclosure is a method for producing a molded article, the method including molding the polymer produced by the method for producing a polymer described in any one of Aspects 1 to 13 or the composition produced by the method for producing a composition described in Aspect 14.

### Advantageous Effects of Invention

The technique according to the present disclosure can achieve at least the following effects. That is, it is possible to achieve an effect that a method for producing a polymer, the method enabling easy control of the molecular weight distribution of the polymer, can be provided.

### Brief Description of Drawings

FIG. 1 is a diagram for illustrating an example of the flow of a polymerization step and an additional polymerization step.
FIG. 2 is a configuration diagram of an embodiment of a polymer production system.
FIG. 3 is a plan view of an embodiment of a reactor.
FIG. 4 is a graph showing a relationship between the residence time and the ratio R in Examples.
FIG. 5 is a graph showing a relationship between the dispersity σ² and the polydispersity Mw/Mn in each of Examples.

### Description of Embodiments

Hereinafter, embodiments of the present disclosure will be described in detail, but these descriptions are examples (representative examples) of embodiments of the present disclosure, and the invention according to the present disclosure is not limited to these contents as long as it does not exceed the gist of the present disclosure.

In the present specification, a numerical range expressed by "to" means a range including the numerical values described before and after "to" as the lower limit value and the upper limit value. Specifically, "A to B" means a value that is A or more and B or less.

**In** the present specification, the expression "A or B" can be read as "at least one selected from the group consisting of A and B".

Moreover, although a plurality of embodiments will be described in the present specification, various conditions in each embodiment can be applied to each other within an applicable range.

Some embodiments will be described with reference to the drawings. The dimensions, materials, shapes, relative arrangements, and the like of components described in the drawings are merely examples.

### Method for Producing Polymer

A method for producing a polymer according to an embodiment of the present disclosure (it may be simply referred to as a "method for producing a polymer"), is a method for producing a polymer, the method including:
a polymerization step including a polymerization treatment of subjecting a polymerization initiator and a monomer to a polymerization reaction in a liquid to yield a polymerization reaction product; and
an additional polymerization step of adding an additive component to cause an additional polymerization reaction, the additional polymerization step being performed at least once,
wherein
the additive component includes at least one selected from the group consisting of a monomer and a polymerization initiator, and
addition of the additive component is performed while controlling an addition amount of the additive component.

The method for producing a polymer described above may include an optionally selected step other than the polymerization step or the additional polymerization step as long as the effect of the technique according to the present disclosure can be obtained.

**In** general, the narrower the molecular weight distribution of a polymer is, that is, the smaller the polydispersity Mw/Mn (Mw: weight-average molecular weight, Mn: number-average molecular weight) is, the smaller the variation in the molecular weight of the polymer is, and a polymer having a desired property is easily obtained. On the other hand, the wider the molecular weight distribution of a polymer is, that is, the larger the polydispersity Mw/Mn is, the workability of the polymer may improve. Thus, in the field of polymers, a technique capable of easily controlling the molecular weight distribution of polymers has been required.

As a result of intensive studies on a polymerization reaction of a monomer performed in the presence of a polymerization initiator, the inventors of the present invention have found that a method including subjecting a monomer to a polymerization reaction while adding at least one additive component selected from the group consisting of a monomer and a polymerization initiator, controls the molecular weight distribution of the resulting polymer, more easily than the batch polymerization. This is because there is a difference between the consumption rate of the initiator and the reaction rate of the monomer, and while the amounts of the monomer and the initiator consumed overtime changes in the batch polymerization, the change in the amounts of the monomer and the initiator to be consumed can be alleviated by allowing the polymerization reaction of the monomer to proceed while adding the at least one additive component selected from the group consisting of a monomer and a polymerization initiator.

Further, the inventors of the present invention have further studied and found that the molecular weight distribution of the resulting polymer can be more easily controlled by adding the at least one additive component selected from the group consisting of a monomer and a polymerization initiator while controlling the ratio of (the amount of the monomer consumed overtime)/(the amount of the initiator consumed overtime). This is because the addition amount and the addition rate of the at least one additive component selected from the group consisting of a monomer and a polymerization initiator can be set based on the ratio described above.

### Polymerization Step

The method for producing a polymer includes a polymerization step including a polymerization treatment of subjecting a monomer in a liquid containing a polymerization initiator and the monomer to a polymerization reaction to yield a polymerization reaction product. The polymerization step may include a treatment other than the polymerization treatment as long as the effect of the technique according to the present disclosure can be obtained.

**In** the polymerization treatment in the polymerization step, the monomer in the liquid containing the polymerization initiator and the monomer may be fully polymerized or may not be fully polymerized. However, from the viewpoint of ensuring the fluidity of the liquid in the subsequent additional polymerization step and the viewpoint of easily controlling the molecular weight distribution, it is preferable that the monomer is not fully polymerized. When the monomer is not fully polymerized, the remaining monomer may be polymerized with a monomer that may be additionally added in the subsequent additional polymerization step.

### Polymerization Treatment

The type of polymerization in the polymerization reaction is not particularly limited, and can be appropriately set depending on the type of the monomer. Examples of the polymerization include chain polymerization, sequential polymerization, and living polymerization, from the viewpoint of the reactive site. From the viewpoint of the reaction mechanism, the polymerization may be addition polymerization, ring-opening polymerization, polycondensation, polyaddition, or addition condensation. The polymerization may be radical polymerization, anionic polymerization, cationic polymerization, or coordination polymerization from the viewpoint of the reactive species.

**In** the method for producing a polymer according to the present embodiment, a plurality of polymerization reactions may be simultaneously performed within a range that the effect of the technique according to the present disclosure can be obtained. For example, when radical polymerization is performed, in addition to the radical polymerization, a polymerization using a different reactive species from that used in the radical polymerization may be applied, for example, anionic polymerization, cationic polymerization, or coordination polymerization.

The polymerization treatment may be performed while mixing (stirring) the materials contained in the liquid.

### (1) Monomer

The number of types of monomers is not particularly limited, and at least one type of monomer may be used. At least two or more types of monomers may be used. Specifically, at least one type of monomer may be used singly for homopolymerization, or at least two or more types of monomers may be used in combination for copolymerization. **In** the case of copolymerization, the type of arrangement of copolymerization is not particularly limited either. Examples thereof include random copolymerization, alternating copolymerization, block copolymerization, and graft copolymerization.

Also, the structure of the resulting polymer is not particularly limited. the structure of the resulting polymer may be linear, branched, or cyclic.

The type of the monomer is not particularly limited as long as the monomer is polymerizable (hereinafter, also referred to as a "polymerizable monomer"). Examples thereof include polymerizable monomers disclosed in, for example, JP 2018-149791 A and JP 2010-194983 A, specifically, at least one monomer selected from the group consisting of a (meth)acryloyl group-containing polymerizable monomer, an isocyanate group-containing polymerizable monomer, a carboxyl group-containing polymerizable monomer, a hydroxyl group-containing polymerizable monomer, an epoxy group-containing polymerizable monomer, an oxazoline group-containing polymerizable monomer, a maleimide group-containing polymerizable monomer, an amino group-containing polymerizable monomer, a styrene-based monomer, a fluorine-containing vinyl monomer, a silicon-containing vinyl-based monomer, a vinyl ester-based monomer, a conjugated diene-based monomer (diene-based monomer), an aromatic vinyl monomer, a vinyl carboxylate, an olefin-based monomer, a vinyl halide, a vinylidene halide, an allyl halide, and vinyl ethyl ether. In particular, the monomer may be at least one monomer selected from the group consisting of a (meth)acryloyl group-containing polymerizable monomer, an isocyanate group-containing polymerizable monomer, a carboxyl group-containing polymerizable monomer, a hydroxyl group-containing polymerizable monomer, an epoxy group-containing polymerizable monomer, an oxazoline group-containing polymerizable monomer, a maleimide group-containing polymerizable monomer, an amino group-containing polymerizable monomer, a styrene-based monomer, a fluorine-containing vinyl monomer, a silicon-containing vinyl-based monomer, a vinyl ester-based monomer, a diene-based monomer, vinyl chloride, vinylidene chloride, allyl chloride, and vinyl ethyl ether. One type of these monomers may be used singly, or two or more types thereof may be used in combination. The monomers listed below may also be derivatives thereof.

As the monomer, a synthesized monomer may be used, or a commercially available monomer may be used.

In the present disclosure, the terms "meth(acryl)" and "(meth)acrylate" mean "methacryl or acryl" and "methacrylate and/or acrylate", respectively.

Specific examples of the (meth)acryloyl group-containing polymerizable monomer include methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, stearyl (meth)acrylate, γ-(methacryloyloxypropyl)trimethoxysilane, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, perfluoroethyl (meth)acrylate, perfluoromethyl (meth)acrylate, diperfluoromethylmethyl (meth)acrylate, 2-perfluoromethyl-2-perfluoroethylethyl (meth)acrylate, 2-perfluorohexylethyl (meth)acrylate, 2-perfluorodecylethyl (meth)acrylate, and 2-perfluorohexadecylethyl (meth)acrylate.

Specific examples of the aromatic vinyl monomer include styrene; an alkylstyrene such as o-methylstyrene, m-methylstyrene, p-methylstyrene, 2,4-dimethylstyrene, p-ethylstyrene, p-isopropylstyrene, p-n-butylstyrene, p-tert-butylstyrene, α-methylstyrene, or α-methyl-p-methylstyrene; an alkoxystyrene such as o-methoxystyrene, m-methoxystyrene, p-methoxystyrene, or p-tert-butoxystyrene; a halostyrene such as o-chlorostyrene, m-chlorostyrene, p-chlorostyrene, or p-bromostyrene; a hydroxystyrene such as o-hydroxystyrene, m-hydroxystyrene, p-hydroxystyrene, or 3,5-dihydroxystyrene; or a styrenesulfonic acid or an alkali metal salt thereof.

Specific examples of the vinyl carboxylate include a vinyl carboxylate having from 3 to 10 carbons such as vinyl formate, vinyl acetate, vinyl propionate, or vinyl pivalate.

Specific examples of the conjugated diene-based monomer include a conjugated diene having from 4 to 16 carbons such as butadiene, isoprene, chloroprene, 1,3 - pentadiene, 2,3-dimethyl-1,3-butadiene, piperylene, 3-butyl-1,3-octadiene, or 1-phenyl-1,3-butadiene.

Specific examples of the olefin-based monomer include an alkene having from 2 to 10 carbons such as ethylene, propylene, 1-butene, 2-butene, or isobutene.

Specific examples of the vinyl halide include vinyl fluoride, vinyl chloride, or vinyl bromide.

Specific examples of the vinylidene halide include vinylidene fluoride, vinylidene chloride, or vinylidene bromide.

Specific examples of the allyl halide include allyl fluoride, allyl chloride, or allyl bromide.

The polymer to be produced is preferably a polymer for photoresist. When the polymer is the polymer for photoresist, a monomer having a chemical structure exhibiting photosensitivity is used instead of the monomer described above or together with the monomer described above. For example, when a polymer for a chemically amplified photoresist using a photoacid generator is produced, the monomer preferably contains a monomer having a group that is partially eliminated through an action of an acid to produce a polar group (the group may be referred to as an "acid-decomposable group"). The polarity of the polymer for photoresist is increased by the action of an acid, the solubility in an alkaline developer is increased, and a pattern can be formed.

Examples of the polar group include an acidic group and an alcoholic hydroxyl group. Examples of the acidic group include an acidic group such as a phenolic hydroxyl group; a carboxy group; a fluorinated alcohol group such as a hexafluoro-2-hydroxyisopropyl group; a sulfonic acid group; a sulfonamide group, a sulfonylimide group; an (alkylsulfonyl)(alkylcarbonyl)methylene group; an (alkylsulfonyl)(alkylcarbonyl)imide group; a bis(alkylcarbonyl)methylene group, a bis(alkylcarbonyl)imide group; a bis(alkylsulfonyl)methylene group, a bis(alkylsulfonyl)imide group; a tris(alkylcarbonyl)methylene group, or a tris(alkylsulfonyl)methylene group. In particular, the polar group is preferably a carboxy group, a fluorinated alcohol group, or a sulfonic acid group.

The acid-decomposable group is preferably a group with a hydrogen atom of the polar group being substituted with a group to be eliminated by an acid. Examples of the acid-decomposable group include a group represented by -C(R^{I})(R^{II})(R^{III}) and a group represented by -C(R^{IV})(R^{V})(OR^{VI}). In the formulas, R^{I} to R^{III} and R^{VI} each independently represent an alkyl group, a cycloalkyl group, an aryl group, an aralkyl group, or an alkenyl group. R^{IV} and R^{V} each independently represent a hydrogen atom, an alkyl group, a cycloalkyl group, an aryl group, an aralkyl group, or an alkenyl group. At least two groups of R^{I} to R^{III} may be bonded to each other to form a ring. In addition, R^{IV} and R^{V} may be bonded to each other to form a ring.

The lower limit of the number of carbons in the acid-decomposable group is not particularly limited, but is preferably 4 or more, and more preferably 5 or more. The upper limit of the number of carbons in the acid-decomposable group is not particularly limited, but is preferably 20 or less.

The alkyl group represented by R^{I} to R^{VI} is preferably an alkyl group having from 1 to 8 carbons. Examples of the alkyl group having from 1 to 8 carbons include a methyl group, an ethyl group, a propyl group, an n-butyl group, a sec-butyl group, a tert-butyl group, a hexyl group, or an octyl group.

The cycloalkyl group represented by R^{I} to R^{VI} may be a monocyclic hydrocarbon group or a polycyclic (bridged cyclic) hydrocarbon group. Preferred examples of the monocyclic hydrocarbon group include a cycloalkyl group having from 3 to 8 carbons, such as a cyclopropyl group, a cyclobutyl group, a cyclopentyl group, a cyclohexyl group, or a cyclooctyl group. Preferred examples of the polycyclic hydrocarbon group include a cycloalkyl group having from 6 to 20 carbons, such as an adamantyl group, a norbornyl group, an isoboronyl group, a camphanyl group, a dicyclopentyl group, an α-pinel group, a tricyclodecanyl group, a tetracyclododecyl group, or an androstanyl group. In the cycloalkyl group, a carbon atom other than the carbon atom at the first position among the carbon atoms contained in the cycloalkane ring may be substituted with a heteroatom such as an oxygen atom. In this case, the number of carbons substituted with the heteroatom is not particularly limited.

Preferred examples of the aryl group represented by R^{I} to R^{VI} include an aryl group having from 6 to 14 carbons, such as a phenyl group, a naphthyl group, or an anthryl group.

Preferred examples of the aralkyl group represented by R^{I} to R^{VI} include an aralkyl group having from 7 to 12 carbons, such as a benzyl group, a phenethyl group, or a naphthylmethyl group.

Preferred examples of the alkenyl group represented by R^{I} to R^{VI} include an alkenyl group having from 2 to 8 carbons, such as a vinyl group, an allyl group, a butenyl group, or a cyclohexenyl group.

The ring formed by bonding at least two groups of R^{I} to R^{III} to each other and the ring formed by bonding of R^{IV} and R^{V} are preferably a cycloalkane ring. Preferred examples of the cycloalkane ring include monocyclic cycloalkane rings such as a cyclopropane ring, a cyclobutane ring, a cyclopentane ring, and a cyclohexane ring; and a polycyclic cycloalkane ring such as a norbornane ring, a tricyclodecane ring, a tetracyclododecane ring, or an adamantane ring.

The alkyl group, the cycloalkyl group, the aryl group, the aralkyl group, or the alkenyl group represented by R^{I} to R^{VI}, or the cycloalkane ring may independently have a substituent as long as the polymerization reaction is not inhibited.

In particular, a tert-butyl group, a tert-amyl group, or groups represented by Formulas (I) to (IV) shown below are preferable as the acid-decomposable group.

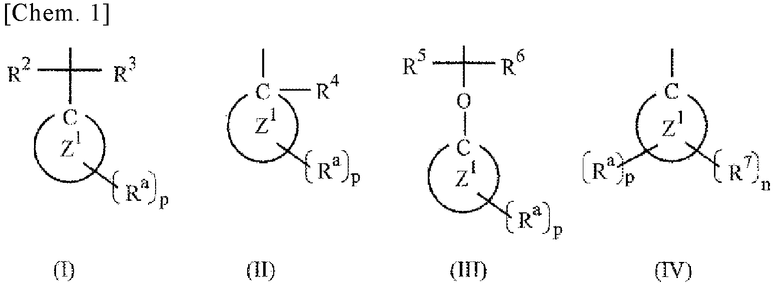

R² to R⁷, R^{a}, n, p, or ring Z¹ in Formulas (I) to (IV) have the same meaning as R² to R⁷, R^{a}, n, p, or ring Z¹ in Formulas (a1) to (a4) described later, respectively.

The acid-decomposable group may be bound to a polymerizable functional group via a spacer. Examples of the spacer include a linking group represented by A in Formula (1) described later.

Examples of the monomer having the acid-decomposable group include a monomer represented by Formula (1) shown below.

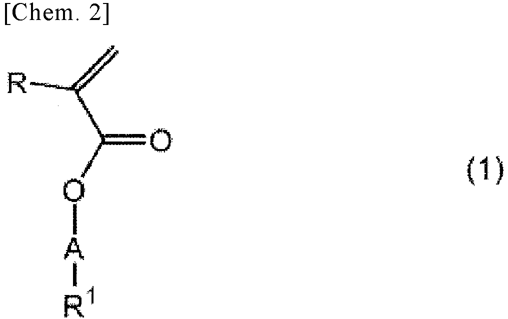

In Formula (1), R¹ represents the acid-decomposable group. In Formula (1), R represents a hydrogen atom, a halogen atom, or an alkyl group having from 1 to 6 carbons and optionally having a halogen atom. Examples of the halogen atom of the alkyl group having from 1 to 6 carbons and optionally having a halogen atom include a chlorine atom, a bromine atom, or an iodine atom. Examples of the alkyl group having from 1 to 6 carbons of the alkyl group having from 1 to 6 carbons and optionally having a halogen atom include a methyl group, an ethyl group, a propyl group, an isopropyl group, an n-butyl group, an isobutyl group, a sec-butyl group, a tert-butyl group, a pentyl group, an isoamyl group, a sec-amyl group, a tert-amyl group, or a hexyl group. Examples of the alkyl group having from 1 to 6 carbons and having a halogen atom include a trifluoromethyl group and a 2,2,2-trifluoroethyl group.

In Formula (1), A represents a single bond or a linking group. Examples of the linking group include a carbonyl group (-C(=O)-), an ether bond (-O-), an ester bond (-C(=O)-O-), an amide bond (-C(=O)-NH-), a carbonate bond (-O-C(=O)-O-), a group with a plurality thereof linked, and a group with an alkylene group and the plurality thereof being bonded. Examples of the alkylene group include a linear or branched alkylene group such as a methylene group, a methylmethylene group, a dimethylmethylene group, an ethylene group, a propylene group, or a trimethylene group; or a divalent alicyclic hydrocarbon group (in particular, a divalent cycloalkylene group) such as a 1,2-cyclopentylene group, a 1,3-cyclopentylene group, a cyclopentylidene group, a 1,2-cyclohexylene group, a 1,3-cyclohexylene group, a 1,4-cyclohexylene group, or a cyclohexylidene group.

Preferred examples of the monomer represented by Formula (1) include one or more monomers selected from the group consisting of monomers represented by Formulas (a1) to (a4) shown below.

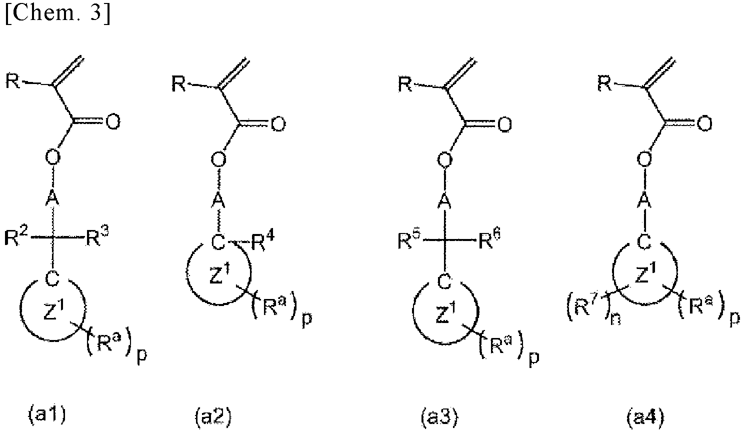

In each of Formulas (a1) to (a4), R represents a hydrogen atom, a halogen atom, or an alkyl group having from 1 to 6 carbons and optionally having a halogen atom, and A represents a single bond or a linking group, as well as in R in Formula (1). A in each of Formulas (a1) to (a4) is preferably a single bond or a group with an alkylene group and a carbonyloxy group being bound (alkylene-carbonyloxy group). R² to R⁴ each independently represent an alkyl group having from 1 to 6 carbons and optionally having a substituent. R² and R³ may be bound to each other to form a ring. R⁵ and R⁶ each independently represent a hydrogen atom or an alkyl group having from 1 to 6 carbons and optionally having a substituent. R⁷ represents a -COOR^{c} group. R^{c} represents a tertiary hydrocarbon group, a tetrahydrofuranyl group, a tetrahydropyranyl group, or an oxepanyl group, all of the groups optionally having a substituent. n represents an integer of 1 or more and 3 or less. When n is 2 or 3, two or three R⁷ may be the same or different from each other. R^{a} is a substituent bound to the ring Z¹, and each independently represents an oxo group, an alkyl group, a hydroxy group optionally protected by a protecting group, a hydroxyalkyl group optionally protected by a protecting group, or a carboxy group optionally protected by a protecting group. p represents an integer of 0 or more and 3 or less. Z¹ represents an alicyclic hydrocarbon ring having from 3 to 20 carbons. When p is 2 or 3, two or three R^{a} may be the same or different from each other.

Examples of the alkyl group represented by R^{a} include an alkyl group having from 1 to 6 carbons, such as a methyl group, an ethyl group, a propyl group, an isopropyl group, an n-butyl group, a sec-butyl group, a tert-butyl group, a pentyl group, an isoamyl group, a sec-amyl group, a tert-amyl group, or an n-hexyl group.

Examples of the hydroxyalkyl group represented by R^{a} include a hydroxyalkyl group having from 1 to 6 carbons, such as a hydroxymethyl group, a 2-hydroxyethyl group, a 1-hydroxyethyl group, a 3-hydroxypropyl group, a 2-hydroxypropyl group, a 4-hydroxybutyl group, or a 6-hydroxyhexyl group.

Examples of the protecting group optionally possessed by the hydroxy group or the hydroxyalkyl group represented by R^{a} include an alkyl group having from 1 to 4 carbons, such as a methyl group, an ethyl group, or a tert-butyl group; a group that forms an acetal bond together with an oxygen atom contained in the hydroxy group (for example, a C₁₋₄alkyl-O-C₁₋₄alkyl group, such as a methoxymethyl group); and a group that forms an ester bond together with an oxygen atom contained in the hydroxy group (for example, an acetyl group or a benzoyl group).

Examples of the protecting group of the carboxy group represented by R^{a} include an alkyl group having from 1 to 6 carbons, such as a methyl group, an ethyl group, a propyl group, an isopropyl group, a n-butyl group, a sec-butyl group, a tert-butyl group, a pentyl group, an isoamyl group, a sec-amyl group, a tert-amyl group, or a hexyl group; 2-tetrahydrofuranyl group; 2-tetrahydropyranyl group; or 2-oxepanyl group.

Examples of the alkyl group having from 1 to 6 carbons represented by R² to R⁶ include a linear or branched alkyl group such as a methyl group, an ethyl group, a propyl group, an isopropyl group, a n-butyl group, an isobutyl group, a sec-butyl group, a tert-butyl group, a pentyl, an isoamyl group, a sec-amyl group, a tert-amyl group, or a hexyl group. The number of carbons of the alkyl group having from 1 to 6 carbons in R² to R⁶ is preferably 1 or more and 4 or less, more preferably 1 or more and 3 or less, and still more preferably 1 or more and 2 or less.

Examples of the substituent optionally possessed by the alkyl group having from 1 to 6 carbons represented by R² to R⁶ include a halogen atom, a hydroxy group, a substituted hydroxy group (for example, an alkoxy group having from 1 to 4 carbons, such as a methoxy group, an ethoxy group, or a propoxy group), or a cyano group. Examples of the alkyl group having from 1 to 6 carbons and having a substituent include a haloalkyl group having from 1 to 6 carbons, such as a trifluoromethyl group or a 2,2,2-trifluoroethyl group; a hydroxyalkyl group having from 1 to 6 carbons, such as a hydroxymethyl group or a 2-hydroxyethyl group; an alkoxyalkyl group having from 1 to 6 carbons, such as a methoxymethyl group, a 2-methoxyethyl group, an ethoxymethyl group, or a 2-ethoxyethyl group; and a cyanoalkyl having from 1 to 6 carbons, such as a cyanomethyl group or a 2-cyanoethyl group.

When R² and R³ are bound to each other to form a ring, examples of the ring include an alicyclic hydrocarbon ring having from 3 to 12 carbons and optionally having a substituent.

Examples of the tertiary hydrocarbon group represented by R^{c} include a tert-butyl group and a tert-amyl group.

Examples of the substituent optionally possessed by the tertiary hydrocarbon group represented by R^{c} include a halogen atom, a hydroxy group, a substituted hydroxy group (for example, an alkoxy group having from 1 to 4 carbons, such as a methoxy group, an ethoxy group, or a propoxy group), or a cyano group.

Examples of the alicyclic hydrocarbon ring having from 3 to 20 carbons represented by Z¹ include a monocyclic alicyclic hydrocarbon ring, a ring containing a norbornane ring or a norbornene ring, an adamantane ring, a ring with a polycyclic aromatic condensed ring hydrogenated (preferably a completely hydrogenated ring), and a bridged cyclic hydrocarbon ring having 2- to 6-rings. Examples of the monocyclic alicyclic hydrocarbon ring include a 3 to 20 membered (preferably 3 to 15 membered, particularly preferably 5 to 12 membered) cycloalkane ring such as a cyclopropane ring, a cyclobutane ring, a cyclopentane ring, a cyclohexane ring, or a cyclooctane ring; or a 3 to 20 membered (preferably 3 to 15 membered, particularly preferably 5 to 10 membered) cycloalkene ring such as a cyclopropene ring, a cyclobutene ring, a cyclopentene ring, or a cyclohexene ring. Examples of the ring containing a norbornane ring or a norbornene ring include a norbornane ring, a norbornene ring, a bornane ring, an isobornane ring, a tricyclo[5.2.1.0^{2,6}]decane ring, and a tetracyclo[4.4.0.1^{2,5} 1^{7,10}]dodecane ring. Examples of the ring with a polycyclic aromatic condensed ring hydrogenated include a perhydroindene ring, a decalin ring, a tricyclo[7.4.0.0^{3,8}]tridecane ring, and a perhydroanthracene ring. Examples of the bridged cyclic hydrocarbon ring having 2- to 6-rings include a tricyclo[4.2.2.1^{2,5}]undecane ring. The number of carbons in the bridged cyclic hydrocarbon ring having 2- to 6-rings is preferably from 6 to 20.

In addition, the monomer preferably includes an alicyclic monomer having [-**C(=O)-O-],** [-S(=O)₂-O-], or [-C(=O)-O-C(=O)-]. When the alicyclic monomer is used, higher substrate adhesion and etching resistance can be imparted to the polymer for photoresist. Hereinafter, the "alicyclic monomer having **[-C(=O)-O-],** [-S(=O)₂-O-], or [-C(=O)-O-C(=O)-]" may be referred to as a "monomer b".

In particular, the monomer b is preferably one or more monomers selected from the group consisting of monomers represented by Formulas (b1) to (b5) shown below. In each of Formulas (b1) to (b5), R represents a hydrogen atom, a halogen atom, or an alkyl group having from 1 to 6 carbons and optionally having a halogen atom, and A represents a single bond or a linking group. X represents a single bond, a methylene group, an ethylene group, an oxygen atom, or a sulfur atom. Y represents a methylene group or a carbonyl group. Z represents a divalent organic group (for example, an alkylene group (in particular, a linear alkylene group having from 1 to 3 carbons) exemplified and described as the alkylene group optionally contained in A in Formulas (a1) to (a4)). V¹ to V³ each independently represent -CH₂-, [-C(=O)-], or [-C(=O)-O-]. with the proviso that at least one of V¹ to V³ is -C(=O)-O-. R⁸ to R¹⁴ each independently represent a hydrogen atom, a fluorine atom, or an alkyl group optionally having a fluorine atom, a hydroxy group optionally protected by a protecting group, a hydroxyalkyl group optionally protected by a protecting group, a carboxy group optionally protected by a protecting group, or a cyano group.

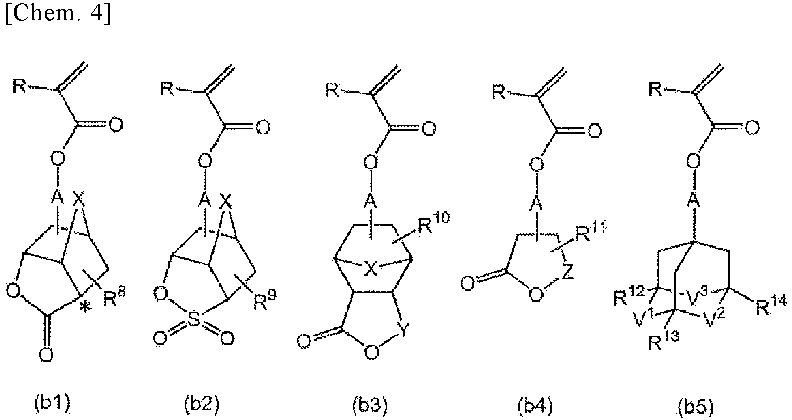

R and A in Formulas (b1) to (b5) may have the same meanings as R and A in Formulas (a1) to (a4), respectively.

R⁸ to R¹⁴ in Formulas (b1) to (b5) each represent an alkyl group, a hydroxy group optionally protected by a protecting group, a hydroxyalkyl group optionally protected by a protecting group, or a carboxy group optionally protected by a protecting group. Examples of the alkyl group, the hydroxy group optionally protected by a protecting group, the hydroxyalkyl group optionally protected by a protecting group, or the carboxy group optionally protected by a protecting group, all of the groups being represented by R⁸ to R¹⁴,include groups similar to the alkyl group, the hydroxy group optionally protected by a protecting group, the hydroxyalkyl group optionally protected by a protecting group, or the carboxy group optionally protected by a protecting group, all of the groups being represented by R^{a} in Formulas (a1) to (a4), respectively. Examples of the alkyl group represented by R⁸ to R¹⁴ include a haloalkyl group having from 1 to 6 carbons, such as a trifluoromethyl or 2,2,2-trifluoroethyl group.

Each of the monomers represented by Formulas (b1) to (b4) may have 1 or 2 or more of R⁸ to R¹¹, and preferably have from 1 to 3 of R⁸ to R¹¹. When the monomers represented by Formulas (b1) to (b4) have two or more of R⁸ to R¹¹, the two or more of R⁸ to R¹¹ may be the same or different from each other.

Among these, it is preferable that the monomer b is a monomer represented by Formula (b1), where R⁸ is an electron withdrawing group such as a cyano group, a group having an amide group, a group having an imide group, or a fluoro(C₁₋₆)alkyl group; a monomer represented by Formula (b2); a monomer represented by Formula (b3), where Y is a carbonyl group; a monomer represented by Formula (b4); or a monomer represented by Formula (b5). The polymer for photoresist obtained by polymerization of these monomers has excellent substrate adhesion and etching resistance and also has excellent solubility in an alkaline developer. Thus, a fine pattern can be formed with high accuracy.

In Formula (b1), when R⁸ is an electron withdrawing group such as a cyano group, a group having an amide group, a group having an imide group, or a fluoroalkyl group having from 1 to 6 carbons, R⁸ is particularly preferably bound to at least the carbon atom with * attached in Formula (b1).

The monomer may further contain a monomer c. The monomer c is a monomer represented by Formula (c1) shown below. The polymer for photoresist obtained by polymerization of the monomer containing the monomer c has high transparency and excellent etching resistance. In Formula (c1), R represents a hydrogen atom, a halogen atom, or an alkyl group having from 1 to 6 carbons and optionally having a halogen atom. A represents a single bond or a linking group. R^{b} represents a hydroxy group optionally protected by a protecting group, a hydroxyalkyl group optionally protected by a protecting group, a carboxy group optionally protected by a protecting group, or a cyano group, and is preferably the hydroxy group or a cyano group. q represents an integer of from 1 to 5. Z² represents an alicyclic hydrocarbon ring having from 6 to 20 carbons. When q is an integer of from 2 to 5, two to five R^{b} may be the same or different from each other.

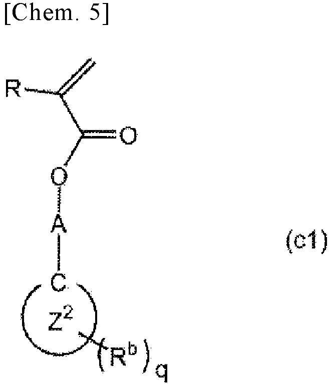

R and A in Formula (c1) may have the same meanings as R and A in Formulas (a1) to (a4), respectively.

R^{b} in Formula (c1) represents a hydroxy group optionally protected by a protecting group, a hydroxyalkyl group optionally protected by a protecting group, or a carboxy group optionally protected by a protecting group. The hydroxy group optionally protected by a protecting group, the hydroxyalkyl group optionally protected by a protecting group, and the carboxy group optionally protected by a protecting group, all of the groups being represented by R^{b}, are synonymous with the hydroxy group optionally protected by a protecting group, the hydroxyalkyl group optionally protected by a protecting group, and the carboxy group optionally protected by a protecting group, all of the groups being represented by R^{a} in Formulas (a1) to (a4), respectively.

Z² in Formula (c1) represents an alicyclic hydrocarbon ring having from 6 to 20 carbons. Examples of the alicyclic hydrocarbon ring having from 6 to 20 carbons include a monocyclic alicyclic hydrocarbon ring, a ring containing a norbornane ring or a norbornene ring, an adamantane ring, a ring with a polycyclic aromatic condensed ring hydrogenated (preferably a completely hydrogenated ring), and a bridged cyclic hydrocarbon ring having 2- to 6-rings. Examples of the monocyclic alicyclic hydrocarbon ring include a 6 to 20 membered (preferably 6 to 15 membered, particularly preferably 6 to 12 membered) cycloalkane ring such as a cyclohexane ring or a cyclooctane ring; or a 6 to 20 membered (preferably 6 to 15 membered, particularly preferably 6 to 10 membered) cycloalkene ring such as a cyclohexene ring. Examples of the ring containing a norbornane ring or a norbornene ring include a norbornane ring, a norbornene ring, a bornane ring, an isobornane ring, a tricyclo[5.2.1.0^{2,6}]decane ring, or a tetracyclo[4.4.0. 1^{2,5}. 1^{7,10}]dodecane ring. Examples of the ring with a polycyclic aromatic condensed ring hydrogenated include a perhydroindene ring, a decalin ring, a tricyclo[7.4.0.0^{3,8}]tridecane ring, or a perhydroanthracene ring. Examples of the bridged cyclic hydrocarbon ring having 2- to 6-rings include a tricyclo[4.2.2.1^{2,5}]undecane ring. The number of carbons in the bridged cyclic hydrocarbon ring having 2- to 6-rings is preferably from 6 to 20. Among these, Z² is preferably the ring containing a norbornane ring or a norbornene ring, or an adamantane ring.

### (2) Polymerization Initiator

The polymerization initiator is a compound that promotes a polymerization reaction of a curable compound by subjecting the curable compound to a treatment such as heating or light irradiation. The polymerization initiator may be a thermal polymerization initiator that initiates polymerization with heat, may be a photopolymerization initiator that initiates polymerization with light, or may be a polymerization initiator that initiates polymerization with another means. However, the polymerization initiator is preferably a thermal polymerization initiator from the viewpoint of functional performance and safety in handling of a polymer. The type of the polymerization initiator is not particularly limited, and examples thereof include a radical polymerization initiator, a cationic polymerization initiator, or an anionic polymerization initiator. One type of the polymerization initiator may be used singly, or two or more types of the polymerization initiators may be used in combination.

As the polymerization initiator, a produced polymerization initiator may be used, or a commercially available polymerization initiator may be used.

Examples of the thermal polymerization initiator that initiates radical polymerization with heat include a peroxide group- or hydroperoxide group-containing compound such as a peroxide, a percarboxylic acid, a peracid ester, a ketone peroxide, a peroxyketal, a diacyl peroxide, or a peroxycarbonate; a bibenzyl compound such as diphenylbutane; an azo compound; an oxime ester compound; a benzoin compound; or an acetophenone derivative. Among these, an azo compound is preferable from the viewpoint of safety in handling.

Specific examples of the azo compound include dimethyl-2,2'-azobis(2-methylpropionate), 2-phenylazo-4-methoxy-2,4-dimethylvaleronitrile, 1-[(1-cyano-1-methylethyl)azo]formamide, 1,1'-azobis(cyclohexane-1-carbonitrile), 2,2'-azobis(2-methylbutyronitrile), 2,2'-azobisisobutyronitrile, 2,2'-azobis(2,4-dimethylvaleronitrile), 2,2'-azobis(2-methylpropionamidine)dihydrochloride, 2,2'-azobis(2-methyl-N-phenylpropionamidine)dihydrochloride, 2,2'-azobis[N-(4-chlorophenyl)-2-methylpropionamidine]dihydrochloride, 2,2'-azobis[N-(4-hydrophenyl)-2-methylpropionamidine]dihydrochloride, 2,2'-azobis[2-methyl-N-(phenylmethyl)propionamidine]dihydrochloride, 2,2'-azobis[2-methyl-N-(2-propenyl)propionamidine]dihydrochloride, 2,2'-azobis[N-(2-hydroxyethyl)-2-methylpropionamidine]dihydrochloride, 2,2'-azobis[2-(5-methyl-2-imidazolin-2-yl)propane]dihydrochloride, 2,2'-azobis[2-(2-imidazolin-2-yl)propane]dihydrochloride, 2,2'-azobis[2-(4,5,6,7-tetrahydro-1H-1,3-diazepine-2-yl)propane]dihydrochloride, 2,2'-azobis[2-(3,4,5,6-tetrahydropyrimidin-2-yl)propane]dihydrochloride, 2,2'-azobis[2-(5-hydroxy-3,4,5,6-tetrahydropyrimidin-2-yl)propane]dihydrochloride, 2,2'-azobis[2-[1-(2-hydroxyethyl)-2-imidazolin-2-yl]propane]dihydrochloride, 2,2' -azobis[2-(2-imidazolin-2-yl)propane], 2,2'-azobis[2-methyl-N-[1,1-bis(hydroxymethyl)-2-hydroxyethyl]propionamide], 2,2'-azobis[2-methyl-N-[1,1-bis(hydroxymethyl)ethyl]propionamide], 2,2'-azobis[2-methyl-N-(2-hydroxyethyl)propionamide], 2,2'-azobis(2-methylpropionamide), 2,2'-azobis(2,4,4-trimethylpentane), 2,2'-azobis(2-methylpropane), 4,4'-azobis(4-cyanopentanoic acid), or 2,2'-azobis[2-(hydroxymethyl)propionitrile].

Examples of the photopolymerization initiator that initiates radical polymerization with light include 1-hydroxy-cyclohexyl-phenyl-ketone, 2,2-dimethoxy-1,2-diphenylethane-1-one, 2-hydroxy-2-methyl-1-phenyl-propane-1-one, 2-methyl-1-(4-methylthiophenyl)-2-morpholinopropane-1-one, or 2,4,6-trimethylbenzoyl-diphenylphosphine oxide.

Examples of the cationic polymerization initiator include a protic acid such as hydrochloric acid, sulfuric acid, perchloric acid, trifluoroacetic acid, methanesulfonic acid, trifluoromethanesulfonic acid, chlorosulfonic acid, or fluorosulfonic acid; and a Lewis acid such as boron trifluoride, aluminum chloride, titanium(IV) chloride, tin(IV) chloride, or iron(III) chloride.

Examples of the anionic polymerization initiator include an organic alkali metal such as methyllithium, n-butyllithium, sec-butyllithium, or t-butyllithium; an organic alkaline earth metal such as methylmagnesium chloride or methylmagnesium bromide; or an alkali metal such as lithium, sodium, or potassium.

When the radical polymerization initiator is used, all the polymerization initiators used in the reaction system may be the radical polymerization initiators, and any one of all the polymerization initiators may be the radical polymerization initiator. For example, when the polymerization initiator is added as the additive component in any of the additional polymerization steps up to the n-th additional polymerization step, the polymerization initiator in any of the additional polymerization steps and the polymerization initiator used in the polymerization step may be radical polymerization initiators.

The contents of the polymerization initiator and the monomer in the liquid containing a polymerization initiator and a monomer used in the polymerization step are not particularly limited, and can be set within a desired range depending on the production conditions and the types thereof.

In the liquid containing the polymerization initiator and the monomer used in the polymerization step (hereinafter, it is also simply referred to as a "liquid in the polymerization step"), the ratio of (the total amount in moles of the monomer consumed in the polymerization step)/(the amount in moles of the initiator consumed in the polymerization step), that is,((the total amount in moles of the monomer contained in the liquid at the start of polymerization in the polymerization step) - (the total amount in moles of the monomer contained in the liquid at the end of the polymerization step)/((the total amount in moles of the polymerization initiator contained in the liquid at the start of polymerization in the polymerization step) - (the total amount in moles of the polymerization initiator contained in the liquid at the end of the polymerization step)) is not particularly limited. However, from the viewpoint of control of Mw/Mn, the ratio is usually 0 or more and 100 or less, and may be 0 or more and 80 or less, or 0 or more and 60 or less, or 0 or more and 30 or more. This ratio can also be applied to the additional polymerization step described later. For example, when attention is paid to the k-th additional polymerization step, the ratio represented by (Mₖᵢ + Mₖₐ - M_{kf})/(I = Iₖᵢ + Iₖₐ - I_{kf}) can also be set to be fall within this range.

### (3) Additional Component

The liquid in the polymerization step may contain a component other than the polymerization initiator or the monomer (hereinafter, an "additional component") as long as the effect of the technique according to the present disclosure can be obtained, and examples thereof include a solvent, a dispersion medium, a chain transfer agent, a modifier, a deprotecting agent, or a stabilizer.

The solvent is not particularly limited as long as it dissolves the components contained in the liquid in the polymerization step, such as the monomer and the polymerization initiator. The solvent can be appropriately selected depending on the types of these components.

Examples of the solvent include water; or an organic solvent, such as a glycol-based solvent (glycol-based compound), an ester-based solvent, a ketone-based solvent, an ether-based solvent, an amide-based solvent, a sulfoxide-based solvent, or a hydrocarbon-based solvent. In particular, a glycol-based solvent is preferable from the viewpoint of the functional performance of the polymer product. One type of the solvent may be used singly, or two or more types of solvents may be used as a mixed solvent.

As the solvent, a produced solvent may be used, or a commercially available solvent may be used.

Examples of the glycol-based solvent include propylene glycol monomethyl ether acetate, ethylene glycol monomethyl ether acetate, ethylene glycol monoethyl ether acetate, or ethylene glycol monobutyl ether acetate.

Examples of the ester-based solvent include a lactic acid ester-based solvent, such as ethyl lactate; a propionic acid ester-based solvent, such as methyl 3-methoxypropionate; and an acetic acid ester-based solvent, such as methyl acetate, ethyl acetate, propyl acetate, or butyl acetate.

Examples of the ketone-based solvent include acetone, methyl ethyl ketone, methyl isobutyl ketone, methyl amyl ketone, cyclopentanone, or cyclohexanone.

Examples of the ether-based solvent include a chain ether such as diethyl ether, diisopropyl ether, dibutyl ether, or dimethoxyethane; or a cyclic ether such as tetrahydrofuran or dioxane.

Examples of the amide-based solvent include N,N-dimethylformamide.

Examples of the sulfoxide-based solvent include dimethyl sulfoxide.

Examples of the hydrocarbon solvent include an aliphatic hydrocarbon such as pentane, hexane, heptane, or octane; a cycloaliphatic hydrocarbon such as cyclohexane or methylcyclohexane; or an aromatic hydrocarbon such as benzene, toluene, or xylene.

In particular, a glycol-based solvent such as propylene glycol monomethyl ether or propylene glycol monomethyl ether acetate; an ester-based solvent such as ethyl lactate; a ketone-based solvent such as acetone, methyl ethyl ketone, methyl isobutyl ketone, methyl amyl ketone, cyclopentanone, or cyclohexanone; or a mixed solvent thereof is preferably used.

The liquid in the polymerization step may contain a chain transfer agent to improve the efficiency of the polymerization reaction.

The type of the chain transfer agent is not particularly limited, and a known or commonly used chain transfer agent used in a polymerization reaction can be used. Examples thereof include a chain transfer agent containing a mercapto group and a chain transfer agent containing a thiocarbonylthio group (a chain transfer agent containing a cyano group and a thiocarbonylthio group, and a chain transfer agent containing no cyano group and containing a thiocarbonylthio group). One type of chain transfer agent may be used singly, or two or more types thereof may be used in combination.

As the chain transfer agent, a produced chain transfer agent may be used, or a commercially available chain transfer agent may be used.

Examples of the chain transfer agent containing a mercapto group include a thiol (preferably, a thiol having an aliphatic hydrocarbon group having from 1 to 20 carbons, the thiol optionally having a substituent, more preferably, a thiol having an aliphatic hydrocarbon group having from 6 to 12 carbons, the thiol optionally having a substituent), such as 1-butanethiol, 2-butanethiol, t-butyl mercaptan, 2-methyl-1-propanethiol, 2-methyl-2-propanethiol, 1-octanethiol, 1-decanethiol, 1-dodecanethiol, 1-tetradecanethiol, n-lauryl mercaptan, cyclohexanethiol, 1-mercaptoethanol, 2-mercaptoethanol, 3-mercapto-1-propanol, 3-mercapto-1,2-propanediol, triethylene glycol dimercaptan, p-mercaptophenylmethanol, 2-(p-mercaptophenyl)ethanol, p-(mercaptomethyl)phenylmethanol, 2-(p-(mercaptomethyl)phenyl)ethanol, p-mercaptophenol, p-(mercaptomethyl)phenol, p-(1-mercaptoethyl)phenol, or p-(2-mercaptoethyl)phenol; a thiol acid such as mercaptopropionic acid, thiobenzoic acid, thioglycolic acid, or thiomalic acid; or a thiol acid ester (preferably a thiol acid alkyl ester) such as methyl thioglycolate, ethyl thioglycolate, n-butyl thioglycolate, methyl 2-mercaptopropionate, ethyl 2-mercaptopropionate, methyl 3-mercaptopropionate, ethyl 3-mercaptopropionate, methyl p-mercaptobenzoate, ethyl p-mercaptobenzoate, methyl p-(mercaptomethyl)benzoate, or ethyl p-(mercaptomethyl)benzoate. Only one type of the mercapto group-containing chain transfer agents described above may be used, or two or more types thereof may be used.

Examples of the chain transfer agent containing a cyano group and a thiocarbonylthio group include a didithiobenzoate-based chain transfer agent containing a cyano group, such as 2-cyano-2-propyl 4-cyanobenzodithioate, 4-cyano-4-(phenylcarbonothioylthio)pentanoic acid, 2-cyano-2-propyl benzodithioate, or 4-cyano-4-(phenylcarbonothioylthio)pentanoic acid N-succinimidyl ester; a trithiocarbonate-based chain transfer agent containing a cyano group, such as 4-cyano-4-[(dodecylsulfanylthiocarbonyl)sulfanyl]pentanoic acid, 2-cyano-2-propyl dodecyl trithiocarbonate, 4-cyano-4-[(dodecylsulfanylthiocarbonyl)sulfanyl]pentanol, poly(ethylene glycol)methyl ether 4-cyano-4-[(dodecylsulfanylthiocarbonyl)sulfanyl]pentanoate, poly(ethylene glycol)methyl ether(4-cyano-4-pentanoate dodecyl trithiocarbonate), poly(ethylene glycol)methyl ether(4-cyano-4-pentanoate dodecyl trithiocarbonate), poly(ethylene glycol)methyl ether(4-cyano-4-pentanoate dodecyl trithiocarbonate), or cyanomethyl dodecyl trithiocarbonate; a dithiocarbamate-based chain transfer agent containing a cyano group, such as cyanomethyl methyl(phenyl)carbamodithioate, cyanomethyl diphenylcarbamodithioate, 1-succinimidyl-4-cyano-4-[N-methyl-N-(4-pyridyl)carbamothioylthio]pentanoate, 2-cyanopropan-2-yl N-methyl-N(pyridin-4-yl)carbamodithioate, or cyanomethyl methyl(4-pyridyl)carbamodithioate; or a xanthate-based chain transfer agent containing a cyano group. In particular, 4-cyano-4-(phenylcarbonothioylthio)pentanoic acid, or 2-cyano-2-propyl benzodithioate, 4-cyano-4-[(dodecylsulfanylthiocarbonyl)sulfanyl]pentanoic acid, or 2-cyano-2-propyl dodecyl trithiocarbonate is preferable.

Examples of the chain transfer agent containing no cyano group and containing a thiocarbonylthio group include a didithiobenzoate-based chain transfer agent containing no cyano group, such as 2-phenyl-2-propyl benzodithioate, 1-(methoxycarbonyl)ethyl benzodithioate, benzyl benzodithioate, ethyl-2-methyl-2-(phenylthiocarbonylthio)propionate, methyl-2-phenyl-2-(phenylcarbonothioylthio)acetate, ethyl-2-(phenylcarbonothioylthio)propionate, or bis(thiobenzoyl)disulfide; a trithiocarbonate-based chain transfer agent containing no cyano group, such as 2-(dodecylthiocarbonylthioylthio)propionic acid, 2-(dodecylthiocarbonylthioylthio)-2-methyl propionic acid, methyl-2-(dodecylthiocarbonylthioylthio)-2-methyl propionate, 2-(dodecylthiocarbonylthioylthio)-2-methyl propionic acid-N-hydroxysuccinimide ester, poly(ethylene glycol)methyl ether(2-methyl-2-propionic acid dodecyl trithiocarbonate), poly(ethylene glycol)bis[2-(dodecylthiocarbonylthioylthio)-2-methyl propionate], 2-(dodecylthiocarbonylthioylthio)-2-methyl propionic acid 3-azido-1-propanol ester, 2-(dodecylthiocarbonylthioylthio)-2-methyl propionic acid pentafluorophenyl ester, poly(ethylene glycol)methyl ether-2-(dodecylthiocarbonylthiooylthio)-2-methyl propionate, poly(ethylene glycol)methyl ether-2-(dodecylthiocarbonylthiooylthio)-2-methyl propionate, poly(ethylene glycol)methyl ether-2-(dodecylthiocarbonylthiooylthio)-2-methyl propionate, poly(ethylene glycol)bis[2-(dodecylthiocarbonylthioylthio)-2-methyl propionate], or bis(dodecylsulfanylthiocarbonyl)disulphide; a dithiocarbamate-based chain transfer agent containing no cyano group, such as benzyl-1H-pyrrole-1-carbodithioate, methyl-2-propionate methyl(4-pyridinyl)carbamodithioate, or N,N'-dimethyl N,N'-di(4-pyridinyl)thiuram disulfide; or a xanthate-based chain transfer agent containing no cyano group. In particular, ethyl-2-methyl-2-(phenylthiocarbonylthio)propionate is preferable.

The liquid in the polymerization step may contain a modifier for modifying (substituting) a part of the monomer or polymer with another group. The type of the modifier is not particularly limited, and can be appropriately selected depending on the purpose. A known modifier can be used.

The liquid in the polymerization step may contain a stabilizer that suppresses decomposition of the monomer and the polymer.

The type of the stabilizer is not particularly limited, and can be appropriately selected depending on the purpose. A known stabilizer such as a tertiary amine can be used.

The reaction conditions of the polymerization reaction in the polymerization treatment are not particularly specified, and can be appropriately set depending on the type of the monomer and the polymerization initiator, for example. For example, the reaction temperature may be 0°C or more and 200°C or less, or may be 20°C or more and 150°C or less. The reaction time may be, for example, 1 millisecond or more and 12 hours or less, and may be 30 seconds or more and 2 hours or less.

**In** the polymerization step, the number of times of the polymerization treatment is not particularly limited, and it may be one time or two or more times.

A vessel for the polymerization treatment is not particularly limited, and a reactor is not particularly limited. For example, a known vessel that enables polymerization reactions can be used. However, from the viewpoint of easily controlling the molecular weight distribution, it is preferable to use a vessel having a reaction flow path for allowing the polymerization reaction of the monomer to proceed, as described later. In particular, it is preferable that at least one step selected from the group consisting of the polymerization step described above and the additional polymerization step, the additional polymerization step being performed at least once, is performed using the vessel having a reaction flow path for allowing the polymerization reaction of the monomer to proceed, as described later.

### Liquid Preparation Treatment

The polymerization step may further include a liquid preparation treatment of preparing the liquid containing the polymerization initiator and the monomer before the above -described polymerization treatment.

The method for preparing the liquid containing the polymerization initiator and the monomer is not particularly limited, and a known method can be applied. Examples thereof include a method of charging a polymerization initiator and a monomer into a container. In this case, at least any one of the polymerization initiator and the monomer may be dissolved in a solvent in advance. In particular, a method of allowing a polymerization initiator and a monomer to flow, and thus yielding a liquid containing the polymerization initiator and the monomer is preferable. More specifically, the liquid preparation treatment is preferably performed using a vessel having an introduction part for introducing at least one of a plurality of liquids to be mixed into a predetermined treatment flow path to mix the plurality of liquids to be mixed in the predetermined treatment flow path, as described later.

### Additional Polymerization Step

The method for producing a polymer includes an additional polymerization step of adding an additive component and performing a further polymerization reaction, the additional polymerization step being performed at least once. The additional polymerization step may include a treatment other than the treatment related to the addition of the additive component (addition treatment) or the treatment related to the polymerization reaction (polymerization reaction treatment).

The additional polymerization step is a step performed after the polymerization step or another additional polymerization step. Thus, for the object to be subjected to the additional polymerization step, for example, when the additional polymerization step is performed n times (where, n is 1 or more), an aspect with the k-th (where, k is 1 or more and n or less) additional polymerization step being performed on the liquid containing the polymerization reaction product obtained in the polymerization step (when k equals to 1) or the liquid containing the polymerization reaction product obtained in the (k - 1)-th additional polymerization step (when k is 2 or more), specifically, an aspect with an additive component being added to these liquids can be exemplified.

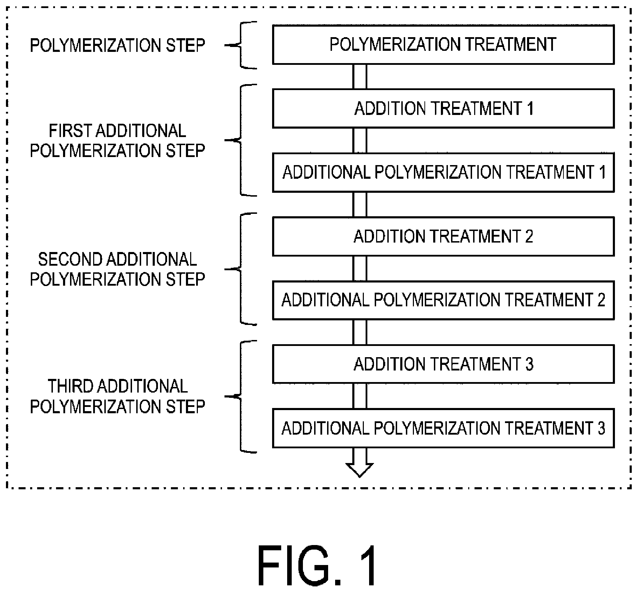

FIG. 1 illustrates an example of a flow related to the polymerization step and the additional polymerization step in the method for producing a polymer according to the present embodiment. The flow of FIG. 1 illustrates an aspect with the additional polymerization step being performed three times, and specifically illustrates that after the polymerization treatment of subjecting a monomer to a polymerization reaction to yield a liquid containing a polymerization reaction product in the polymerization step, an additional addition treatment 1 of additionally adding an additive component and an additional polymerization treatment 1 of additionally polymerizing a monomer are performed in the first additional polymerization step, an additional addition treatment 2 of additionally adding an additive component and an additional polymerization treatment 2 of additionally polymerizing a monomer are performed in the second additional polymerization step, and then, an additional addition treatment 3 of additionally adding an additive component and an additional polymerization treatment 3 of additionally polymerizing a monomer are performed in the third additional polymerization step. The additive component may be a monomer or a polymerization initiator.

As shown in the above specific example, the liquid to be charged in the k-th additional polymerization step is a liquid containing the polymerization reaction product obtained in the polymerization step, when k is 1, and is a liquid containing the polymerization reaction product obtained in the (k - 1)-th additional polymerization step, when k is 2 or more.

Here, a case where another process is included between the polymerization step and the additional polymerization step or between the additional polymerization steps is considered. For example, when an aging step is included between the polymerization step and the first additional polymerization step, the liquid containing the polymerization reaction product obtained in the polymerization step is a liquid after the first additional polymerization step and the aging step are performed. The polymerization reaction product obtained in the polymerization step is included not only in the liquid obtained after the polymerization step is performed but also in the liquid obtained after the aging step is performed. Similarly, when a purification step is included between the first additional polymerization step and the second additional polymerization step, the liquid containing the polymerization reaction product obtained in the first additional polymerization step is a liquid obtained after the first additional polymerization step and the purification step are performed. The polymerization reaction product obtained in the first additional polymerization step is included not only in the liquid obtained after the first additional polymerization step is performed but also in the liquid obtained after the purification step is performed.

The number n of times the additional polymerization step is performed is not particularly limited as long as n is 1 or more. However, in that the molecular weight distribution of the polymer is easily controlled, n is preferably larger, and specifically, n may be 2 or more, 3 or more, 5 or more, 10 or more, 20 or more, 50 or more, 100 or more, or more. In addition, n is preferably not too large from the viewpoint of production efficiency, and may be, for example, 10000 or less, 5000 or less, 1000 or less, 500 or less, 100 or less, 50 or less, or 10 or less.

### Addition Treatment

The aspect of the treatment of adding an additive component (addition treatment) is not particularly limited. The addition treatment can be performed by a known method or by combining known methods. The additive component only needs to contain at least one selected from the group consisting of a monomer and a polymerization initiator. The additive component may be only a monomer, may be only a polymerization initiator, may be both a monomer and a polymerization initiator, or may contain an additional component as long as the effect of the technique according to the present disclosure can be obtained. Examples of the additional component include the additional components described in the polymerization step described above. When the additional polymerization step is performed a plurality of times, the additive components added in respective additional polymerization steps may be the same or different from each other.

When the additive component contains a monomer, the type of the monomer is not particularly limited, and the monomer described in the section of the polymerization step described above can be used. The type of the monomer may be the same as or different from the type of the monomer polymerized in the polymerization step or the type of the monomer added in another additional polymerization step. For example, in any of the additional polymerization steps up to the n-th additional polymerization step, when a monomer is added as an additive component, the type of the monomer in any of the additional polymerization steps (type A of the monomer) and the type of the monomer (type B of the monomer) used in the polymerization step (or the polymerization step and another additional polymerization step) may overlap at least partially with each other, and the type A of the monomer and the type B of the monomer may all be the same or may all be different from each other. The monomer may be of one type or of two or more types.

Similarly, when the additive component contains a polymerization initiator, the type of the polymerization initiator is also not particularly limited, and the monomer described in the section of the polymerization step described above can be used. The type of the polymerization initiator may be the same as or different from the type of the polymerization initiator used in the polymerization step or the type of the polymerization initiator added in the another additional polymerization step. The polymerization initiator may be of one type or of two or more types.

In the addition treatment, the addition of the additive component is additionally performed while the addition amount of the additive component is controlled.

Means for performing the above control is not particularly limited, and examples thereof include a means for additionally adding an additive component such that a ratio R described later falls within a desired range in the additional addition of the additive component. The additional addition of the additive component may be performed manually or automatically. Specifically, it is preferable to use a vessel (device) having an information providing part configured to provide information on the additional addition amount of the additive component with the ratio R in a desired range. In addition, it is more preferable to use a vessel (device) having a control part configured to allow for control of the additional addition of the additive component such that the ratio R falls within a desired range.

The basis of the addition amount of the additive component is not particularly limited, but is preferably on a molar basis from the viewpoint of easily controlling the molecular weight distribution. The basis may be one, may be two or more, and for example, may be a combination of a molar basis and a mass basis.

The aspect of controlling the addition amount of the additive component is not particularly limited, but from the viewpoint of easily controlling the molecular weight distribution, in the additional polymerization step, the addition of the additive component in the k-th additional polymerization step is preferably performed while controlling the following Mₖᵢ, Mₖₐ, M_{kf}, Iₖᵢ, Iₖₐ, and I_{kf}:
Mₖᵢ: a total amount in moles of the monomer contained in the liquid at the start of the k-th additional polymerization step;
Mₖₐ: a total amount in moles of the monomer added in the k-th additional polymerization step;
M_{kf}: a total amount in moles of the monomer contained in the liquid at the end of the k-th additional polymerization step;
Iₖᵢ: a total amount in moles of the polymerization initiator contained in the liquid at the start of the k-th additional polymerization step;
Iₖₐ: a total amount in moles of the polymerization initiator added in the k-th additional polymerization step; and
I_{kf}: a total amount in moles of the polymerization initiator contained in the liquid at the end of the k-th additional polymerization step,
where the sum of Mₖₐ and Iₖₐ is not 0 mol, Mₖₐ is 0 mol or more, and Iₖₐ is 0 mol or more.

The parameters of Mₖᵢ, Mₖₐ, M_{kf}, Iₖᵢ, Iₖₐ, and I_{kf} described above may be controlled while the amount in moles of each object in the actual reaction system is measured, but can also be controlled based on data calculated through calculation. When the amount in moles of each object in the actual reaction system is measured, the measurement method is not particularly limited. For example, the measurement can be performed by a known method such as gas chromatography or high performance liquid chromatography. In addition, when the control is performed based on data calculated through calculation, these parameters can be evaluated using a simulation software. As the simulation software, Aspen Plus available from Aspen Technology, Inc. can be used, for example. An example of the calculation method when the radical polymerization initiator is used as the polymerization initiator will be described in Examples described later.

From the viewpoint that the molecular weight distribution can be more easily controlled, in the additional polymerization step, the addition of the additive component in the k-th additional polymerization step is preferably performed while further controlling M represented by Formula M using Mₖᵢ, Mₖₐ, and M_{kf} or I represented by Formula I using Iₖᵢ, Iₖₐ, and I_{kf} $M = {M}_{ki} + {M}_{ka} - {M}_{kf}$ $I = {I}_{ki} + {I}_{ka} - {I}_{kf}$

The control of M and I may be performed by controlling either one of M and I, but it is preferable that the addition of the additive component is performed while controlling both M and I.

M represents the total amount in moles of the monomer consumed in the k-th additional polymerization step, and I represents the total amount in moles of the polymerization initiator consumed in the k-th additional polymerization step.

As described above, the inventors of the present invention have further studied and found that the molecular weight distribution can be more easily controlled by adding at least one additive component selected from the group consisting of a monomer and a polymerization initiator while controlling the ratio of (the amount of the monomer consumed over time)/(the amount of the initiator consumed over time). Thus, from the viewpoint that the molecular weight distribution can be more easily controlled, in the additional polymerization step, the addition of the additive component in the k-th additional polymerization step is preferably performed while further controlling the ratio R represented by Formula R using M and I. $R = M / I$

From the viewpoint that the molecular weight distribution of the polymer to be produced can be narrowed, that is, the polydispersity Mw/Mn can be reduced, it is preferable that in the additional polymerization step, the control of the ratio R satisfies Condition (1) shown below:
Condition (1): a dispersity σ² calculated from Formula σ² shown below is 300 or less.
[Math. 2] ${σ}^{2} = \frac{1}{n} {\sum }_{i = 1}^{n} {\left({x}_{i}-{x}^{˜}\right)}^{2}$
*xᵢ* : Ratio R in i-th additional polymerization step
*x̃* : Average value of ratio R in respective additional polymerization steps up to n-th additional polymerization step.

The smaller the Mw/Mn of the polymer, the smaller the variation in the molecular weight of the polymer, and the more easily a polymer having a desired property is obtained.

The σ² described above is preferably as small as possible, and is preferably 300 or less, but is more preferably 200 or less, still more preferably 100 or less, and particularly preferably 50 or less.

The σ² can be controlled by adjusting the additional addition amount of the monomer in each additional polymerization step.

The addition treatment in the first additional polymerization step (hereinafter, it may be referred to as a "first addition treatment") is a treatment of adding an additive component to the liquid containing the polymerization reaction product obtained in the polymerization step, and the addition treatment of an additive component in the k-th (where, k is 2 or more) additional polymerization step (hereinafter, it may be referred to as the "k-th addition treatment") is a treatment of adding an additive component to the liquid containing the polymerization reaction product obtained in the (k - 1)-th additional polymerization step. This means that the first addition treatment of the additive component is different from the monomer supply treatment in the polymerization step, and the k-th (where, k is 2 or more) additional polymerization step is different from the additional addition treatment of the monomer in the (k - 1)-th additional polymerization step. That is, a case where the additive component is continuously supplied in the polymerization step is not treated as a case where the addition treatment of the additive component in the subsequent additional polymerization step is continuously performed, and this continuous supply is treated as a treatment where the entire operation of the continuous supply is the monomer supply treatment in the polymerization step. Similarly, a case where a monomer is continuously and additionally added in the (k - 1)-th (where, k is 2 or more) additional polymerization step is not treated as a case where the subsequent k-th additional addition treatment of ae monomer is continuously performed, and this continuous supply is treated as a case where the entire operation of the continuous supply is an additional addition treatment of a monomer in the (k-1)-th additional polymerization step.

The addition treatment is preferably performed while allowing the additive component to flow, and in particular, it is preferable to perform the addition treatment using a vessel having an introduction part that introduces at least one of a plurality of liquids to be mixed into a predetermined treatment flow path to mix the plurality of liquids to be mixed in the predetermined treatment flow path, which will be described later.

### Additional Polymerization Treatment

The additional polymerization treatment is a treatment of polymerizing a monomer contained in the liquid and/or a monomer that can be contained in the additive component.

The polymerization method is not particularly limited, and the same method as the polymerization treatment in the polymerization step described above can be applied.

In the additional polymerization treatment, the monomer in the liquid may be fully polymerized or may be not fully polymerized. When the monomer is not fully polymerized, the remaining monomer may be polymerized together with a monomer additionally added in an additional polymerization step that can be performed after the additional polymerization treatment. It is preferable that the amount of the remaining monomer at the time of completion of each additional polymerization step decreases as the number of additional polymerization steps increases, and it is preferable that the monomer in the liquid and the additionally added monomer are fully polymerized at the time of completion of the final additional polymerization step.

The additional polymerization treatment may be performed while mixing (stirring) the materials contained in the liquid.

In each additional polymerization step, the number of times of the additional polymerization treatment is not particularly limited, and it may be one time or two or more times.

### Additional step

The method for producing a polymer may include a step (hereinafter, also referred to as an "additional step") other than the polymerization step or the additional polymerization step described above as long as the effect of the technique according to the present disclosure can be obtained. However, the additional step is preferably not a step of initiating a polymerization reaction, for example, heating a liquid obtained through each step or irradiating the liquid with light for initiating polymerization.

Examples of the additional step include preparing a component contained in the liquid containing a polymerization initiator and a monomer before the polymerization step, and a preparation step of preparing a monomer to be additionally added before the additional polymerization step. Each of these components to be prepared may be obtained and prepared through synthesis, or may be prepared by yielding each of these components as a commercial product.

Hereinafter, an example of the additional step other than the preparation step will be described.

### Aging step

The method for producing a polymer may include, after the polymerization step, an aging step of allowing the polymerization reaction of the monomer whose reaction has been started in the polymerization treatment to proceed.

The method for allowing the polymerization reaction of the monomer to proceed is not particularly limited, and examples thereof include a method of holding the liquid containing the polymerization reaction product obtained in the polymerization step in a state where the liquid is left to stand, and a method of holding the liquid while allowing the liquid to flow through a flow path in a vessel having the flow path. The temperature at which the monomer is held in the aging step is not particularly limited. The temperature may be room temperature, but may be room temperature or lower using a cooling means.

The method for producing a polymer may include a step similar to the aging step described above after the additional polymerization step.

### Purification step

The method for producing a polymer may include a purification step of purifying the additional polymerization reaction product from the liquid containing the additional polymerization reaction product obtained in the additional polymerization step (when the additional polymerization step is performed a plurality of times, not only the final additional polymerization step but also an intermediate additional polymerization step is included).

The method for purifying the additional polymerization reaction product is not particularly limited, and examples thereof include a method using a means such as filtration, distillation/concentration, extraction, crystallization, adsorption, membrane separation, solid-liquid separation, or drying. These purification means can be performed by a known method. One type of the means may be used, or two or more types thereof may be used.

### Product Filling step

The method for producing a polymer may include a product filling step of filling an optionally selected container with the obtained polymer after each of the above steps is performed, preferably after the purification step is performed.

The molecular weight of the polymer produced by the production method described above is not particularly limited and can be set depending on the use of the polymer. For example, the weight-average molecular weight (Mw) may be 1000 or more and 1000000 or less, 2000 or more and 100000 or less, or 3000 or more and 20000 or less.

The molecular weight of the polymer produced by the production method described above is not particularly limited and can be set depending on the use of the polymer. For example, the number-average molecular weight (Mn) may be 500 or more and 500000 or less, 1000 or more and 50000 or less, or 1500 or more and 10000 or less.

The polydispersity Mw/Mn of the polymer produced by the production method described above is not particularly limited. However, the polydispersity Mw/Mn is preferably small, specifically and preferably 3.0 or less, more preferably 2.0 or less, still more preferably 1.8 or less, and particularly preferably 1.7 or less, from the viewpoint of reducing variations in the molecular weight of the polymer and easily yielding a polymer having a desired property.

The polydispersity is calculated, for example, by measuring the weight-average molecular weight (Mw) and the number-average molecular weight (Mn) of the polymer by gel permeation chromatography (GPC) and dividing the former by the latter. As the measurement conditions of GPC, the following conditions can be adopted. Apparatus: GPC system (manufactured by Shimadzu Corporation)
System controller: SIL-20A (manufactured by Shimadzu Corporation)
Pump: LC-20AD (manufactured by Shimadzu Corporation)
Degasser: DGU-20A3R (manufactured by Shimadzu Corporation)
Column oven: CTO-20AC (manufactured by Shimadzu Corporation)
RI detector: RID-20A (manufactured by Shimadzu Corporation)
Column: three columns of GPC KF-806L (column size: 8.0 mm (ID) × 300 mm (L), manufactured by Resonac Corporation)
Guard column: KF-G4A (column size: 4.6 mm (ID) × 10 mm (L), manufactured by Resonac Corporation)
Column temperature: 40°C
Cell temperature: 40°C
Eluent: tetrahydrofuran
Eluent flow rate: 0.8 mL/min
Injection amount: 35 µL
Analysis time: 60 minutes
Sample: 5 wt.% tetrahydrofuran solution
Sample for preparing calibration curve: polystyrene calibration kit S-M-10 (manufactured by Agilent Technologies)

The polymer produced by the production method described above may be distributed on the market as a polymer, or may be distributed on the market as a mixture mixed with another component, or may be distributed on the market as a molded article after molding.

### Vessel

The specific vessel for carrying out the method for producing a polymer described above is not particularly limited, and may be a combination of known vessels. However, as a result of intensive studies by the inventors of the present invention, it has been found that, in the polymerization step and the additional polymerization step, it is preferable to use a reactor having an introduction part for introducing at least one of a plurality of liquids to be mixed into a predetermined treatment flow path so as to mix the plurality of liquids to be mixed in the predetermined treatment flow path or a vessel having a reaction flow path for allowing a polymerization reaction of a monomer contained in a mixed liquid of a plurality of liquids to be mixed to proceed, and it is particularly preferable to use a reactor having the introduction part and the reaction flow path, from the viewpoint of improving the uniformity of the liquid used in each step and furthermore, easily controlling the molecular weight distribution of the polymer.

In addition, from the viewpoint that the molecular weight distribution of the polymer can be easily controlled, it is preferable to use a microfluidic reactor (hereinafter, also referred to as a "microfluidic reactor") as the vessel. **In** the microfluidic reactor, for example, as the flow path in the reactor having the flow path described above, a micro flow path is preferably used.

Hereinafter, an example of the microfluidic reactor will be described, but the vessel for carrying out the method for producing a polymer described above is not limited to this example.

The microfluidic reactor is a reactor in which a minute flow path (micro flow path)having a flow path width on the order of µm is formed. The microfluidic reactor is not particularly limited. The microfluidic reactor may be a chip-type microfluidic reactor in which a minute flow path is formed inside or on a surface of a substrate, or may be a tube-type microfluidic reactor in which a minute flow path is formed in a tube. The chip-type microfluidic reactor can also be referred to as a microfluidic chip reactor, and the tube-type microfluidic reactor can also be referred to as a microfluidic tube reactor.

The micro flow path may be formed inside the substrate or on the surface of the substrate. The cross-sectional shape of the micro flow path is not particularly limited, and can be appropriately selected depending on the purpose. Examples thereof include a circular shape, a rectangular shape, a semicircular shape, and a triangular shape. The width (inner diameter) and the cross-sectional area of the minute flow path are not particularly limited as long as the effects of the technique according to the present disclosure are not impaired, and can be appropriately selected depending on the purpose. For example, the flow path width is preferably 15 mm or less, more preferably 20 µm or more and 1000 µm or less, and still more preferably 100 µm or more and 500 µm or less. When the flow path width exceeds 15 mm, the surface area per unit volume decreases, and as a result, rapid mixing and heat removal of reaction heat may be difficult. When the flow path width is larger than 1000 µm, the diffusion length of the molecules becomes long. Thus, the mixing efficiency may be lowered and the function as a microfluidic reactor may deteriorate. When the flow path width is less than 20 µm, the pressure loss of the liquid flowing through the flow path increases and a pump having a high pressure resistance is required as a pump used for liquid feeding. Thus, the production cost may increase. The cross-sectional area of the flow path is preferably 0.0001 mm² or more and 225 mm² or less, more preferably 0.0003 mm² or more and 1 mm² or less, and still more preferably 0.01 mm² or more and 0.25 mm² or less. The length (flow path length) of the flow path formed in the microfluidic reactor is not particularly limited, and can be appropriately set depending on the mixing time and the reaction time. The flow path length of the reaction flow path is preferably 10 mm or more and 500 m or less, more preferably 20 mm or more and 1000 mm or less, and still more preferably 50 mm or more and 500 mm or less. The volume of the flow path formed in the microfluidic reactor is not particularly limited, and can be appropriately set depending on the mixing time and the reaction time. The volume of the reaction flow path is preferably 0.001 µL or more and 112500 µL or less, more preferably 0.0006 µL or more and 1000 µL or less, still more preferably 0.5 µL or more and 1000 µL or less. Also, the volume may be 1 µL or more and 1000 µL or less, 5 µL or more and 500 µL or less, or 10 µL or more and 100 µL or less. The flow rate of the liquid flowing through the micro flow path of the microfluidic reactor is not particularly limited, and can be appropriately selected depending on the purpose. For example, in the production of a polymer, the flow rate is preferably 0.000001 mL/min or more and 10 mL/min or less, more preferably 0.00001 mL/min or more and 0.1 mL/min or less, and still more preferably 0.0001 mL/min or more and 0.05 mL/min or less. At a flow rate within the range described above, the rapid mixing of the monomer component and the polymerization initiator tends to be achieved, and further, the pressure loss tends to be prevented. The flow rate described above refers to the flow rate of the fluid immediately after being introduced into the micro flow path.

The microfluidic reactor may have a reaction acceleration means for accelerating a reaction. The reaction acceleration means is not particularly limited, and can be appropriately selected depending on the desired chemical reaction. Examples of the reaction acceleration means include a heating means, a light irradiation means, a vibration energy application means, and a voltage application means. Examples of the heating means include a heater and a microwave irradiation device, examples of the light irradiation means include an LED, an organic light emitting device (OLED), a laser, or an arc lamp, examples of the vibration energy application means include an ultrasonic generator and a piezoelectric transducer, and examples of the voltage application means include an electrode. The reaction acceleration means may include at least one of the various types of means described above, and it may be a combination thereof. The reaction acceleration means may heat the fluid in the reaction flow path by a microwave irradiation device as the heating means, or may irradiate the fluid in the reaction flow path with light by an illumination device using various light sources as the light irradiation means.

The aspect of the microfluidic reactor is not particularly limited, but from the viewpoint of easily controlling the molecular weight distribution of the polymer, the reactor preferably includes: an introduction part for introducing at least one of a plurality of liquids to be mixed into a predetermined treatment flow path to mix the plurality of liquids to be mixed in the predetermined treatment flow path; and a reaction flow path that is disposed downstream of the introduction part and formed in the microfluidic reactor as a micro flow path forming a part of the predetermined treatment flow path, the reaction flow path allowing a chemical reaction of a reactant contained in the plurality of liquids to be mixed to proceed.

### Polymer Production System

As a result of further intensive studies by the inventors of the present invention, it has been found that in the method for producing a polymer described above, it is preferable to adopt a system shown as an example below, from the viewpoint of improving the uniformity of the liquid used in each step and thus easily controlling the molecular weight distribution of the polymer.

The polymer production system for carrying out the method for producing a polymer described above is
a microfluidic system including a plurality of microfluidic reactors, a micro flow path being formed in each of the plurality of microfluidic reactors,
the system including a plurality of reaction means including:
   an introduction part for introducing at least one of a plurality of liquids to be mixed into a predetermined treatment flow path to mix the plurality of liquids to be mixed in the predetermined treatment flow path; and
   a reaction flow path that is disposed downstream of the introduction part and formed in the microfluidic reactor as a micro flow path forming a part of the predetermined treatment flow path, the reaction flow path allowing a chemical reaction of a reactant contained in a mixed liquid of the plurality of liquids to be mixed to proceed,
   wherein
   the plurality of reaction means are disposed in series such that the reaction flow paths of the plurality of reaction means communicate with each other, and
   a volume of the reaction flow path in at least one of the plurality of reaction means may be different from a volume of the reaction flow path in another reaction means.

Hereinafter, the microfluidic system will be specifically described, but the system for carrying out the method for producing a polymer described above is not limited thereto.

### Overall Configuration

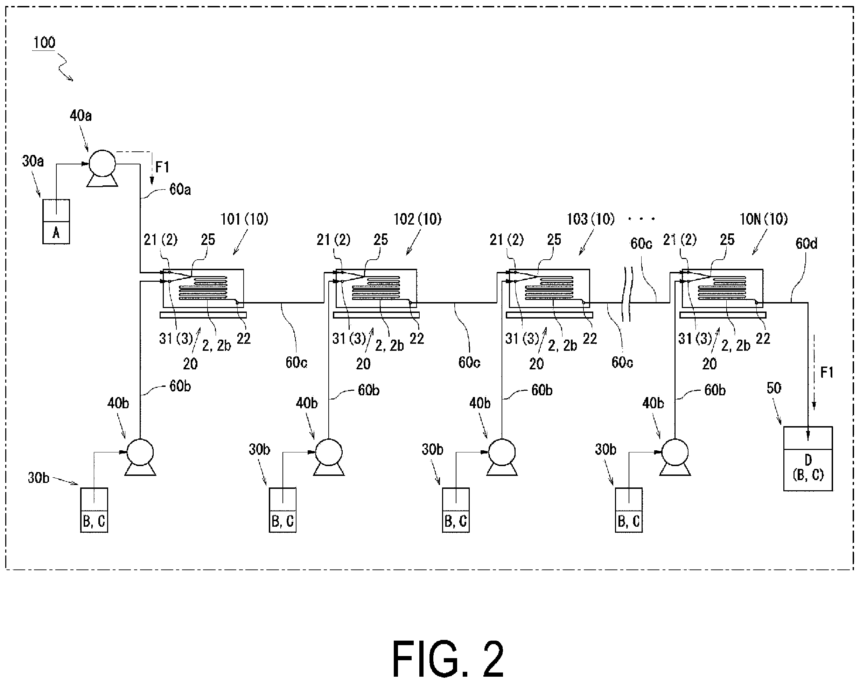

First, an overall configuration of a polymer production system 100 will be described. The polymer production system 100 includes a plurality of microfluidic reactors, each having a micro flow path formed in a substrate. More specifically, as illustrated in FIG. 2, the polymer production system 100 includes a plurality of reactors 10, which are microfluidic reactors, a plurality of heaters 20, a raw material tank 30a and a plurality of raw material tanks 30b, a liquid feeding pump 40a and a plurality of liquid feeding pumps 40b, a product tank 50, and a conduit 60a, a plurality of conduits 60b, a plurality of conduits 60c, and a conduit 60d. In the present aspect, "upstream" refers to the side of the raw material tank 30a in a production flow path F1 (an example of the "predetermined treatment flow path") from the raw material tank 30a to the product tank 50, and "downstream" refers to the side of the product tank 50 in the production flow path F1. The production flow path F1 is a continuous flow path from the raw material tank 30a as a fluid supply source to the product tank 50 as a fluid discharge destination.

The raw material tank 30a stores a solution containing a polymerization initiator A (polymerization initiator A solution). By subjecting the polymerization initiator A (hereinafter, it may be simply referred to as the "polymerization initiator A") to a treatment such as heating or light irradiation, an initiation reaction starts, and a polymerization reaction of a monomer is accelerated. Each of the raw material tanks 30b stores a solution containing a monomer B and a monomer C as reactants (a monomer BC solution). The monomer B and the monomer C are monomers that polymerize with each other in the presence of the polymerization initiator A. The monomer B and the monomer C may be different types of monomers, and in this case, the polymerization is copolymerization. The monomer B and the monomer C may be the same type of monomer, and in this case, the polymerization is homopolymerization. The polymerization initiator A solution and the monomer BC solution are examples of the "plurality of liquids to be mixed" according to the present disclosure, respectively.

As illustrated in FIG. 2, in the polymer production system 100, the plurality of reactors 10, which are a plurality of microfluidic reactors, are arranged side by side in a flow direction. The reactors 10 adjacent to each other in the flow direction are connected by the conduits 60c such that the reactors 10 can communicate with each other. Thus, in the polymer production system 100, the plurality of reactors 10 are disposed in series. Each of the reactors 10 is provided with a heater 20 of the plurality of heaters 20 as described later.

Hereinafter, the number of reactors 10 in the present embodiment is denoted as N (where, N is an integer of 2 or more). The number N of the reactors 10 is not particularly limited, but is preferably 5 or more, for example. Among the plurality of reactors 10 included in the polymer production system 100, the k-th reactor 10 (where, k is an integer of 1 or more and N or less) from the upstream is referred to as a reactor 10k. That is, in the polymer production system 100, the reactor 101, the reactor 102, ..., and the reactor 10N are disposed in this order from the upstream.

The polymer production system 100 continuously supplies the polymerization initiator A solution and the monomer BC solution to the production flow path F1 via the reactor 101 disposed most upstream and continuously and additionally supplies (additionally charges) the monomer BC solution to the production flow path F1 via the reactors 10 disposed downstream of the reactor 101, and thus, a polymer D is sequentially produced. The polymer D produced by the polymer production system 100 is discharged from the reactor 10N disposed most downstream of the plurality of the reactors 10.

The conduit 60a, the conduits 60b, the conduits 60c, and the conduit 60d are pipes through which a fluid can flow. The conduit 60a connects the raw material tank 30a and the reactor 101 such that the raw material tank 30a and the reactor 101 can communicate with each other, and each of the conduits 60b connects each of the raw material tanks 30b and each of the reactors 10 such that the raw material tank 30b and the reactor 10 can communicate with each other. Each of the conduits 60c connects the reactors 10 adjacent to each other in the flow direction such that the reactors 10 can communicate with each other. The conduit 60d connects the reactor 10N and the product tank 50 such that the reactor 10N and the product tank 50 can communicate with each other.

As described above, the raw material tank 30a is a container that stores the polymerization initiator A solution, and the raw material tanks 30b are containers that store the monomer BC solution. The polymerization initiator A solution and the monomer BC solution are supplied to the reactor 10 via the conduit 60a or the conduits 60b, respectively. The product tank 50 is a container that stores the polymer D produced by the polymer production system 100. The polymer D is discharged from the reactor 10N via the conduit 60d to the product tank 50.

The conduit 60a is provided with a liquid feeding pump 40a and the conduits 60b are provided with liquid feeding pumps 40b, respectively. The liquid feeding pump 40a is a liquid feeding means for transporting the fluid in the raw material tanks 30a to the reactor 10 and the liquid feeding pumps 40b are liquid feeding means for transporting the fluid in the raw material tanks 30b to the reactors 10. The polymerization initiator A solution in the raw material tank 30a is pumped in the conduit 60a by driving of the liquid feeding pump 40a and supplied to the reactor 10. The monomer BC solution in each of the raw material tanks 30b is pumped in each of the conduits 60b by driving of each of the liquid feeding pumps 40b and supplied to each of the reactors 10. Examples of the liquid feeding pump include a syringe pump, a diaphragm pump, and a pressure control pump. In the present embodiment, for example, the polymerization initiator A solution and the monomer BC solution may be supplied to the reactor 10 using syringe pumps, each storing each of the polymerization initiator A solution and the monomer BC solution, without using the raw material tank 30a or the raw material tanks 30b.

### Reactor

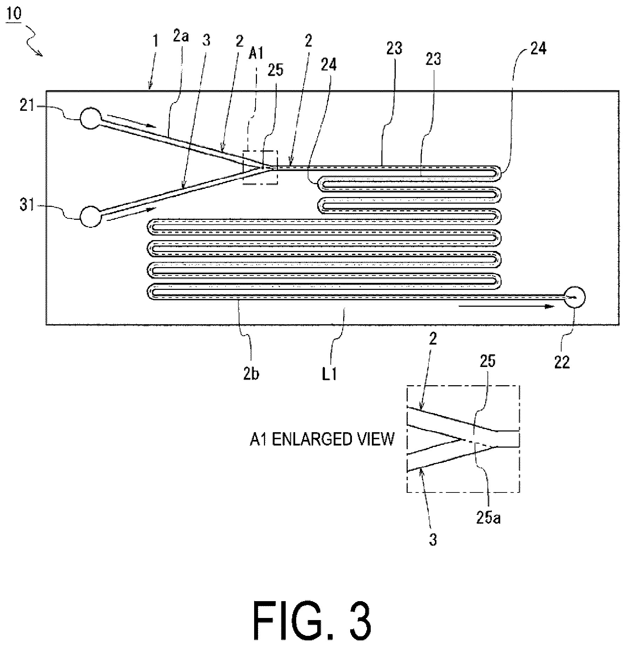

Next, the structure of the reactor 10 will be described. FIG. 3 is a plan view of the reactor 10 according to the present embodiment. The reactor 10 according to the present embodiment is configured as a microfluidic reactor in which a micro flow path (also referred to as a microchannel) is formed inside a substrate. The reactor 10 corresponds to an example of the "reaction means" according to the present disclosure. As illustrated in FIG. 3, the reactor 10 has a substrate 1, a first flow path 2, and a first introduction flow path 3.

The substrate 1 is a plate-shaped member having a rectangular shape in plan view. The material of the substrate 1 is not particularly limited, but for example, silicon, silica, quartz, glass, resin, and silicon carbide can be used. From the viewpoint of the production of a resist polymer, a glass chip can be suitably used as a non-metal material having solvent resistance.

The first flow path 2 and the first introduction flow path 3 are configured as grooves formed on a surface of the substrate 1. The first flow path 2 and the first introduction flow path 3 can be formed, for example, by subjecting the substrate 1 to etching processing.

The first flow path 2 is formed as a minute flow path forming a part of the production flow path F1. As illustrated in FIG. 3, the first flow path 2 has a meandering shape in plan view. A supply port 21 for supplying a fluid into the first flow path 2 is formed at one end of the first flow path 2, and a discharge port 22 for discharging a solution from the inside of the first flow path 2 is formed at the other end of the first flow path 2. That is, the first flow path 2 continuously extends from the supply port 21 to the discharge port 22 while meandering. The fluid supplied to the supply port 21 flows through the first flow path 2 and is discharged from the discharge port 22. The first flow path 2 includes a plurality of linear flow paths 23 formed linearly and disposed in parallel in plan view, and a plurality of curved flow paths 24 formed in a curved line shape, each of the plurality of curved flow paths 24 connecting end portions of one of the linear flow paths 23 and another one of the linear flow paths 23 adjacent to each other in the flow direction. The first flow path 2 is formed in a meandering shape by the linear flow paths 23 and the curved flow paths 24.

An introduction part 25 for introducing a fluid from the first introduction flow path 3 into the first flow path 2 is formed in a middle part of the first flow path 2 in the flow direction, more specifically, in a middle part of the linear flow path 23 positioned most upstream in the first flow path 2. The introduction part 25 introduces the monomer BC solution into the first flow path 2 to mix the polymerization initiator A solution and the monomer BC solution, which are the plurality of liquids to be mixed, in the production flow path F1 (the first flow path 2 in this example). The introduction part 25 is formed as a merging part that merges with the first introduction flow path 3. That is, the first flow path 2 merges with the first introduction flow path 3 at the introduction part 25. As shown in an enlarged view A1 of FIG. 3, the introduction part 25 has a first introduction port 25a configured to open to the first introduction flow path 3.

Here, in the present disclosure, in the reaction means, the micro flow path for allowing a chemical reaction of a reactant contained in the mixed liquid of a plurality of liquids to be mixed to proceed is referred to as a "reaction flow path". The reaction flow path is a region in which the chemical reaction of the reactant introduced in the introduction part proceeds. In the polymer production system 100, a region of the first flow path 2 downstream of the introduction part 25 corresponds to the "reaction flow path". In the first flow path 2, a region upstream of the introduction part 25 is defined as a transport flow path 2a, and a region downstream of the introduction part 25 is defined as a reaction flow path 2b. That is, the transport flow path 2a is a region from the supply port 21 to the introduction part 25, and the reaction flow path 2b is a region from the introduction part 25 to the discharge port 22. Although details will be described later, the polymerization initiator A solution is transported in the transport flow path 2a of the **reactor** 101 disposed most upstream among the plurality of reactors 10, and a produced liquid (reaction mixture) containing the polymerization initiator A solution and the polymer D is transported in the transport flow path 2a of each of the reactors 10 disposed downstream of the reactor 101. The fluid transported from the transport flow path 2a of the first flow path 2 and the monomer BC solution transported from the first introduction flow path 3 merge at the introduction part 25 of the first flow path 2, and are mixed while flowing through the reaction flow path 2b. Further, as will be described in detail later, the mixed liquid flowing through the reaction flow path 2b is heated by the heater 20 so as to have a temperature equal to or higher than the reaction temperature, and thus, the polymerization reaction between the monomer B and the monomer C in the presence of the polymerization initiator A is accelerated. That is, the reaction flow path 2b is a micro flow path for mixing the polymerization initiator A solution and the monomer BC solution, which are the plurality of liquids to be mixed, and allowing a chemical reaction by the mixed liquid of the polymerization initiator A solution and the monomer BC solution to proceed. The reaction means according to the present disclosure may have a plurality of introduction parts, for example, depending on the type and the amount of the liquid to be mixed, and the timing of introduction. In this case, the reaction flow path can be defined as a micro flow path disposed downstream of the introduction part positioned most downstream in the reaction means.

The flow path length (length in the flow direction) of the reaction flow path 2b is defined as L1. L1 is a flow path length of the first flow path 2 on the downstream side of the introduction part 25, and can be defined as a flow path length from the introduction part 25 to the discharge port 22. That is, the flow path length L1 can be defined as the flow path length of the first flow path 2 on the downstream side of the position where the mixing of the monomer BC solution introduced from the introduction part 25 and the polymerization initiator A solution starts.

Here, the flow path length L1 of the reaction flow path 2b in the reactor 10 of the k-th reactor unit 10k from the upstream among the plurality of reactors 10 included in the polymer production system 100 is denoted as L1k. That is, the flow path lengths L 1 of the reaction flow paths 2b in the reactor 101, the reactor 102, ..., and the reactor 10N disposed in this order from the upstream are L11, L12, ..., and L1N, respectively. In this case, in the polymer production system 100, the flow path length L1 of the reaction flow path 2b in each reactor 10 is set such that L1k is shorter than L1(k + 1), while the cross-sectional areas of the flow path flow paths 2b in the plurality of reactors 101 to 10N are equivalent (constant). That is, in the plurality of reactors 10, the flow path length L1 of the reaction flow path 2b in each reactor 10 is set such that the flow path length L1 of the reaction flow path 2b becomes longer as the reactor 10 is positioned further downstream. Thus, in the polymer production system 100 according to the present embodiment, the volume of the reaction flow path 2b is larger as the reactor 10 is positioned further downstream. However, the technique of the present disclosure is not limited to this case, and the volume can be appropriately set.

The first introduction flow path 3 is a flow path for introducing the monomer BC solution into the first flow path 2. The first introduction flow path 3 is linearly formed. A supply port 31 for supplying a fluid (the monomer BC solution in this example) into the first introduction flow path 3 is formed at one end of the first introduction flow path 3, and the other end of the first introduction flow path 3 is connected to the introduction part 25 of the first flow path 2. As a result, the first introduction flow path 3 and the first flow path 2 communicate with each other via the first introduction port 25a. The transport flow path 2a and the reaction flow path 2b of the first flow path 2, and the first introduction flow path 3 form a substantially Y-shape. The monomer BC solution supplied to the supply port 31 flows through the first introduction flow path 3 and is introduced into the first flow path 2 from the first introduction port 25a of the introduction part 25.

In the technique according to the present disclosure, the introduction flow path (the first introduction flow path 3 in this example) for introducing a fluid into the reaction flow path is not an essential configuration. For example, in one aspect, the reactor 10 has no first introduction flow path 3, and the monomer BC solution may be directly introduced from the introduction part 25 of the first flow path 2. However, from the viewpoint of efficient mixing, the reaction means preferably has an introduction flow path for guiding a fluid to the introduction part. The reaction means according to the present disclosure may have a plurality of introduction flow paths.

As illustrated in FIG. 2, the conduit 60a for supplying the polymerization initiator A solution from the raw material tank 30a to the first flow path 2 is connected to the supply port 21 of the first flow path 2 in the reactor 101 disposed most upstream among the plurality of reactors 10. The conduit 60d for discharging the produced liquid from the first flow path 2 to the product tank 50 is connected to the discharge port 22 of the first flow path 2 in the reactor 10N disposed most downstream among the plurality of reactors 10. In the reactors 10 adjacent to each other in the flow direction, the discharge port 22 of the first flow path 2 in the reactor 10 at the side of the upstream and the supply port 21 of the first flow path 2 in the reactor 10 at the side of the downstream are connected via the conduit 60c. Thus, the first flow path 2 forms a part of the production flow path F1. The plurality of reactors 10 are disposed in series such that the reaction flow paths 2b communicate with each other. Each of the conduits 60b for supplying the monomer BC solution from the raw material tank 30b to the first introduction flow path 3 is connected to the supply port 31 of the first introduction flow path 3 in each of the reactors 10.

### Heater

The heater 20 is a device for accelerating a chemical reaction (polymerization reaction) by heating the mixed liquid flowing through the reaction flow path 2b of the reactor 10. The heater 20 is an example of the "reaction acceleration means" according to the present disclosure. The heating temperature of the heater 20 is not particularly limited, and can be appropriately set depending on the reaction temperature. To accelerate the polymerization reaction between the monomer B and the monomer C in the presence of the polymerization initiator A, the heater 20 heats the mixed liquid in the reaction flow path 2b to a temperature equal to or higher than the reaction temperature of the polymerization reaction. The reaction temperature here is, for example, a decomposition temperature of the polymerization initiator A. The heater 20 is not particularly limited, and for example, a known heater such as an electric heater can be used. Here, in the present aspect, the heater 20 is provided in the reactor 10 so that the chemical reaction of the reactant is accelerated in the reaction flow path 2b.

### Method for Producing Polymer Using Polymer Production System

Hereinafter, a method for producing a polymer using the polymer production system 100 will be described. The production of a polymer according to the embodiment is performed by continuously supplying the polymerization initiator A solution and the monomer BC solution to the production flow path F1 including the plurality of first flow paths 2. Specifically, the polymerization initiator A solution is continuously supplied to the first flow path 2 of the reactor 101 with the liquid feeding pump 40a, and the monomer BC solution is continuously supplied to the first flow path 2 of each reactor 10 with each of the liquid feeding pumps 40b. The flow rate and flow velocity of each solution to be supplied to the first flow path 2 are not particularly limited, and can be appropriately set depending on the purpose. The polymer production system 100 produces a polymer for each reactor 10. Hereinafter, the produced liquid supplied from the reactor 10k, which is the k-th reactor 10 from the upstream, to the reactor 10(k + 1) is referred to as the k-th produced liquid.

First, production of a polymer in the reactor 101 disposed most upstream will be described. The polymerization initiator A solution flowing from the raw material tank 30a through the conduit 60a with the liquid feeding pump 40a and supplied to the reactor 101 is introduced into the first flow path 2 via the supply port 21. On the other hand, the monomer BC solution flowing from the raw material tank 30b through the conduit 60b with the liquid feeding pump 40b and supplied to the reactor 101 is introduced into the first introduction flow path 3 via the supply port 31. Then, the monomer BC solution transported from the first introduction flow path 3 is introduced into the first flow path 2 via the introduction part 25, and merges with the polymerization initiator A solution transported through the transport flow path 2a. This merging causes mixing of the polymerization initiator A solution and the monomer BC solution to start in the introduction part 25. The polymerization initiator A solution and the monomer BC solution are mixed by diffusion mixing using the reaction flow path 2b as a micro flow path as a mixing field while flowing through the reaction flow path 2b with the pressure of the liquid feeding pump 40a and the liquid feeding pump 40b. At this time, the mixed liquid of the polymerization initiator A solution and the monomer BC solution flows through the reaction flow path 2b while being heated by the heater 20 such that the mixed liquid has a temperature equal to or higher than the reaction temperature. Thus, the polymerization reaction between the monomer B and the monomer C in the presence of the polymerization initiator A is accelerated and the polymer D is produced. At this time, a part of the polymerization initiator A, at least part of the monomer B, and at least part of the monomer C contained in the mixed liquid are consumed by the polymerization reaction. The monomer B and the monomer C may be fully polymerized, or may be polymerized with a part of the monomer B and a part of the monomer C remaining.

Next, the production of a polymer in the reactor 10p (where, p is an integer of 2 or more and less than N) disposed downstream of the reactor 101 will be described. The (p - 1)-th produced liquid flowing through the conduit 60c from the reactor 10(p - 1) disposed immediately upstream of the reactor 10p and supplied to the reactor 10p is introduced into the first flow path 2 through the supply port 21. This (p - 1)-th produced liquid contains the polymerization initiator A and the polymer D. In the (p - 1)-th produced liquid, the monomer B or the monomer C that has not reacted in the respective reactors 10 upstream of the reactor 10p may remain. On the other hand, as in the case of the reactor 101, the monomer BC solution is supplied to the reactor 10p by the liquid feeding pump 40b. Next, the monomer BC solution transported from the first introduction flow path 3 is introduced into the first flow path 2 via the introduction part 25, and merges with the (p - 1)-th produced liquid transported through the transport flow path 2a. As a result, the monomer BC solution is additionally introduced into the production flow path F1, and the monomer is additionally charged. Then, the (p - 1)-th produced liquid containing the polymerization initiator A and the polymer D and the additionally introduced monomer BC solution start to mix in the introduction part 25, and the (p - 1)-th produced liquid and the monomer BC solution are mixed while flowing through the reaction flow path 2b. Further, the mixed liquid flowing through the reaction flow path 2b is heated by the heater 20 so as to have a temperature equal to or higher than the reaction temperature, and thus, the polymerization reaction between the monomer B and the monomer C in the presence of the polymerization initiator A is accelerated, and the polymer D is newly produced. At this time, the monomer B and the monomer C may be fully polymerized, or may be polymerized with a part of the monomer B and a part of the monomer C remaining. When the monomer B and the monomer C that have not reacted in the respective reactors 10 upstream of the reactor 10p remain in the mixed liquid, these monomers may also be polymerized. The p-th produced liquid containing the polymerization initiator A and the polymer D is discharged from the discharge port 22, flows through the conduit 60c, and is supplied to the reactor 10(p + 1) disposed immediately downstream.

In the production of a polymer using the polymer production system 100, from the viewpoint of yielding a polymer having a smaller polydispersity Mw/Mn, it is desirable to adjust the ratio of the monomer to the polymerization initiator on a molar basis (hereinafter, it may be referred to as "M/I ratio") throughout the reaction time. When two or more types of monomers are used, the amount of the monomers to be used at this M/I ratio is the total amount of the two or more types of monomers. The M/I ratio can be adjusted by continuously and additionally supplying (additionally charging) the monomer BC solution to the reaction flow path 2b of the reactor 10N disposed downstream of the reactor 101 disposed most upstream. In the production of a polymer using the polymer production system 100, from the viewpoint described above, preferably, in at least two reactors 10 among the plurality of reactors 10, the reactor 10 positioned further downstream preferably has a larger M/I ratio in the introduction part 25. More preferably, in at least three reactors 10 among the plurality of reactors 10, the reactor 10 positioned further downstream has a larger M/I ratio in the introduction part 25. Still more preferably, in at least four reactors 10 among the plurality of reactors 10, the reactor 10 positioned further downstream has a larger M/I ratio in the introduction part 25. Particularly preferably, the reactor 10 positioned further downstream has a larger M/I ratio in the introduction part 25.

At this time, from the viewpoint of yielding a polymer having a smaller polydispersity Mw/Mn, the ratio of the maximum M/I ratio in the introduction parts 25 of the reactors 10 other than the reactor 10 disposed most upstream to the M/I ratio in the introduction part 25 of the reactor 10 disposed most upstream ((maximum M/I ratio)/(most upstream M/I ratio)) is preferably 0.50 or more and 5.00 or less, more preferably 0.50 or more and 3.00 or less, still more preferably 0.50 or more and 2.00 or less, still more preferably 0.60 or more and 2.00 or less, still more preferably 0.70 or more and 2.00 or less, still more preferably 0.80 or more and 2.00 or less, and particularly preferably 0.80 or more and 1.80 or less.

From the viewpoint of yielding a polymer having a smaller polydispersity Mw/Mn, the M/I ratio in the introduction part 25 of the reactor 101 disposed most upstream is preferably 1.0 or more and 20.0 or less, more preferably 1.0 or more and 10.0 or less, still more preferably 1.5 or more and 10.0 or less, still more preferably 1.5 or more and 8.0 or less, still more preferably 2.0 or more and 8.0 or less, and particularly preferably 2.0 or more and 5.0 or less.

Next, the production of the polymer in the reactor 10N disposed most downstream will be described. The reaction treatment in the reactor 10N is the same as that in the reactor 10p, and thus, detailed description is omitted. In the same manner as in the reactor 10p, in the reaction flow path 2b of the reactor 10N, the (N-1)-th produced liquid containing the polymerization initiator A and the polymer D and an additionally introduced monomer BC solution are mixed, and the resulting mixed liquid is heated by the heater 20 so as to have a temperature equal to or higher than the reaction temperature, and thus, the polymerization reaction is accelerated and the polymer D is newly produced. At this time, in the reaction flow path 2b of the reactor 10N, the polymerization initiator A contained in the mixed liquid may be fully consumed through the polymerization reaction between the monomer B and the monomer C. In addition, the monomer B and all of the monomer C contained in the mixed liquid may be fully consumed through the polymerization reaction.

The N-th produced liquid containing the polymer D is discharged from the discharge port 22, flows through the conduit 60d, and is discharged to the product tank 50. As a result, the polymer D produced in the reactors 101, 102, ..., 10N, which are disposed in this order, is recovered. As described above, in the method for producing a polymer using the polymer production system 100 according to the embodiment, a large amount of the polymer D can be produced by performing additional charge (N - 1) times.

### Operation and Effect of Polymer Production System

In the polymer production system 100 according to the present embodiment in which the polymerization reaction of the monomer is performed, the polymerization reaction treatment is performed a plurality of times in the production flow path F1 through the additional charging of the monomer in the reactors 10. Thus, the number of molecules of the polymer D flowing through the production flow path F1 can be increased every time the polymer D passes through each reaction flow path 2b from the upstream to the downstream. That is, the reactor 10 positioned more upstream has a lower concentration of the polymer D in the reaction flow path 2b, and the concentration of the monomer as a reactant becomes relatively higher. Thus, in the reaction flow path 2b of the reactor 10 disposed more upstream, particularly most upstream, the concentration of the monomer is high, and thus there are more reaction opportunities than in the reaction flow path 2b of the reactor 10 on the downstream and the polymerization reaction easily proceeds. As a result, the polymer D as a reaction product rapidly increases in the reaction system, and the molecular weight of the polymer D may vary. Thus, from the viewpoint of reducing the polydispersity Mw/Mn of the polymer D, it is preferable that the residence time is made shorter in the reaction flow path 2b of the reactor 10 positioned more upstream to suppress the variation in the molecular weight of the polymer D to be produced.

In the polymer production system 100 according to the present embodiment, the volume of the reaction flow path 2b may be larger in the reactor 10 positioned further downstream. That is, the volume of the reaction flow path 2b may be smaller in the reactor 10 positioned more upstream. In this case, the residence time in the reaction flow path 2b becomes shorter in the reactor 10 disposed more upstream, and a sufficient reaction rate can be ensured in the reaction flow path 2b while suppressing the variation in the molecular weight of the polymer D to be produced. As a result, the polymer production system 100 according to the present embodiment can reduce the polydispersity Mw/Mn of the polymer D.

From the viewpoint of uniformly mixing the plurality of liquids to be mixed and allowing the reaction to proceed uniformly, the polymer production system 100 may include a microfluidic device of a different type from the reactor 10. For example, a device for performing extraction or another chemical/physical process as a unit operation on the fluid flowing through the micro flow path may be interposed between the reactor 10k and the reactor 10(k + 1).

In the viewpoint described above, the introduction part 25 may introduce at least one of the polymerization initiator A solution and the monomer BC solution, which are the plurality of liquids to be mixed, into the reaction flow path 2b such that the mixed liquid contains the reactant. For example, only the monomer BC solution or only the polymerization initiator A solution may be introduced into the reaction flow path 2b, or the monomer BC solution and the polymerization initiator A solution may be introduced into the reaction flow path 2b. The introduction part 25 may introduce a fluid different from the polymerization initiator A solution or the monomer BC solution.

When the volumes of the plurality of reaction flow paths are not all equivalent, the technique according to the present disclosure is not limited to the aspect in which the volume of the reaction flow path 2b is larger in a reactor positioned further downstream and the volume of the reaction flow path in at least one reaction means may be different from the volume of the reaction flow path in another reaction means. Thus, it is possible to set the residence time in the reaction flow path, for example, depending on the type of the reaction performed in the reaction flow path and the reaction time. In addition, the reaction rate can be improved by adjusting the residence time for each of the plurality of reaction flow paths. For example, in the reaction means positioned further downstream, the volume of the mixed liquid of the plurality of liquids to be mixed increases as compared with the reaction means positioned upstream, and the reaction opportunity may be reduced because of a decrease in the collision frequency between the reactants. In this case, in the reaction means positioned further downstream, the reaction rate decreases, but by adjusting the reaction flow path of the reaction means positioned further downstream so as to be longer, a sufficient residence time can be ensured and as a result, the reaction rate can be improved. In addition, the technique according to the present disclosure may be set depending on various conditions such as the type of reaction and the properties of the reactant, such that the volume of the reaction flow path becomes smaller as the reaction means is positioned further downstream.

In the technique according to the present disclosure, when a plurality of reaction means are used, volumes of reaction flow paths of at least other two types of the plurality of reaction means may be equivalent. For example, when the chemical reaction in the reaction means positioned further downstream is higher in reaction rate than that of the chemical reaction in the reaction means positioned more upstream, the reaction can sufficiently proceed even though the residence time in the reaction flow path of the reaction means positioned further downstream is short. Thus, in such a case, even though the volumes of both reaction flow paths are equivalent (where, "equivalent" includes identical), a good reaction rate can be realized in both of the reaction means.

Further, the polymer production system 100 according to the present embodiment includes the heater 20 as the reaction acceleration means, and thus, the polymerization reaction between the monomer B and the monomer C in the reaction flow path 2b can be accelerated.

In the present embodiment described above, the polymerization initiator A solution and the monomer BC solution are mixed as the plurality of liquids to be mixed, but the plurality of liquids to be mixed may include only a fluid containing a polymerization initiator and a fluid containing one type of monomer. A fluid containing one type of monomer may be introduced into the reaction flow path 2b of the reactor 10 from the introduction part 25, and the one type of monomer may be polymerized in the presence of a polymerization initiator in the reaction flow path 2b of the reactor 10.

In the aspect described above, the polymerization reaction between the monomer B and the monomer C introduced into the reactor 10 is performed. However, the present invention is not limited to the reaction between the reactants contained in the liquid to be mixed (for example, polymerization between the monomers). For example, a fluid containing a reactant and a fluid containing a decomposition catalyst may be mixed as a plurality of liquids to be mixed, and the decomposition reaction of the reactant may be performed in the reactor.

In the embodiment described above, a chip-type microfluidic reactor is used as the microfluidic device. However, a tube-type microfluidic reactor (microfluidic tube reactor) or another form of microfluidic reactor may be used. For example, the reactor 10 may be configured as the microfluidic tube reactor. In the embodiment described above, the reaction means is configured by a single microfluidic reactor (reactor 10), but the present aspect is not limited to this example. The reaction means may be configured including a plurality of microfluidic reactors. For example, the introduction part and the reaction flow path may be provided in separate microfluidic reactors. The introduction part may not be formed in a microfluidic reactor.

### Module

As a specific reactor for carrying out the method for producing a polymer described above, an aspect with the plurality of reactors 10 disposed in series is described above as an example, but the plurality of reactors 10 may be disposed in parallel. In particular, when the plurality of reactors 10 disposed in series are regarded as a single series unit, an aspect in which series units are disposed in parallel is preferable. In the following description, a configuration is referred to as a module in which series units are disposed in parallel, each of the series units including the plurality of reactors 10 disposed in series. This module can be treated substantially as an aspect of the reactor 10. Thus, the polymer production system described above can be configured to use the module as the reactor 10. For example, as illustrated in FIG. 2, the reactors 10 directly disposed can be treated as the series unit, and the series units disposed in parallel are regarded as the module. The number of modules used in the system may be one or more.

The aspect of the module is not particularly limited, but it is preferable to include the microfluidic reactor 10 as a reactor included in the module from the viewpoint of easily controlling the molecular weight distribution of the polymer. In the present disclosure, as the reactor 10 included in the module, a module including the microfluidic reactor 10 is referred to as a microfluidic module.

Hereinafter, an example of the microfluidic module will be described, but the vessel for carrying out the method for producing a polymer described above is not limited to this example.

An embodiment of the microfluidic module for carrying out the method for producing a polymer described above is
a microfluidic module including a micro flow path formed in a substrate and a plurality of microfluidic reactors 10 for fluid flowing through the micro flow path,
the microfluidic module including a plurality of series units including at least the plurality of microfluidic reactors 10 connected to each other in series, wherein the plurality of series units are disposed in parallel.

The microfluidic reactor described above is preferably of a chip-type microfluidic reactor, and in such a case, the microfluidic module can be
a microfluidic module including a micro flow path formed in a substrate and a plurality of chip-type microfluidic reactors 10 for performing a unit operation with respect to fluid flowing through the micro flow path,
the microfluidic module including a plurality of series units including at least the plurality of chip-type microfluidic reactors 10 connected to each other in series, wherein the plurality of series units are connected in parallel. Hereinafter, the microfluidic module according to this preferred embodiment will be described.

The aspect of disposition of the series units in the microfluidic module is not particularly limited, and the microfluidic module may have a board form in which the plurality of chip-type microfluidic reactors 10 included in each of the series units connected in parallel are mounted on a board.

Various aspects can be adopted for the number and the disposition pattern of the microfluidic reactors 10 mounted on the board of the microfluidic module, and for example, the microfluidic reactors 10 may be mounted on the board in a disposition pattern of 4 rows in a longitudinal direction and 10 columns in a lateral direction.

When the microfluidic module is included in the polymer production system, the system may be a system including a plurality of microfluidic modules, each having a board form.

When the microfluidic module is included in the polymer production system, the system may be a microfluidic system including a plurality of microfluidic chips, each having a micro flow path formed in a substrate and performing a unit operation with respect to fluid flowing through the micro flow path,
the microfluidic system including the plurality of microfluidic modules, each having a board form in which the plurality of the microfluidic chips connected to each other in parallel are mounted on a board.

Further, these systems may be systems with a plurality of micro flow path modules disposed in multiple stages, each of the plurality of micro flow path modules having a board form as described above.

The chip-type microfluidic reactor 10 may include, for example, a substrate and a micro flow path formed inside the substrate. The cross-sectional shape of the micro flow path is not particularly limited and can be appropriately selected depending on the purpose. Examples thereof include a circular shape, a rectangular shape, a semicircular shape, or a triangular shape. The shape of the substrate is not particularly limited. For example, the shape may be a plate-shaped member having a rectangular shape in plan view. Also, the material of the substrate is not particularly limited, and for example, glass, silicon, silica, quartz, resin, or silicon carbide can be used.

Next, one form of the micro flow path formed in the substrate of the microfluidic reactor 10 will be described. Here, an example in which the microfluidic reactor 10 is applied as a microchip reactor for mixing a plurality of liquids to be mixed and subjecting the plurality of liquids to be mixed to a reaction will be described. The number of micro flow paths in the microfluidic reactor 10 is not particularly limited, and examples thereof include an aspect including a first channel, a first introduction flow path, and a mixing/reaction flow path. The mixing/reaction flow path may be a micro flow path for mixing the plurality of liquids to be mixed and subjecting the plurality of liquids to be mixed to a reaction.

The micro flow path formed in the substrate can be formed by, for example, subjecting the substrate to an etching treatment, but a method for forming the micro flow path is not particularly limited. For example, when the substrate has a two-layer structure, an open groove for forming a micro flow path is formed in a base substrate of the first layer, and then a lid substrate of the second layer is bonded so as to close the open groove of the base substrate from above. Thus, the micro flow path can be formed inside the substrate.

A reaction acceleration means such as a heater may be provided on the lower surface of the substrate in the microfluidic reactor 10. The heater heats the fluid flowing through the micro flow path (mixing/reaction flow path) in the microfluidic reactor 10. A temperature sensor may be disposed on the lower surface of the substrate. The type of the heater is not particularly limited, and a known heater such as an electric heater can be used. For example, by heating the fluid flowing through the micro flow path (mixing/reaction flow path) to a reaction temperature range, the chemical reaction of the fluid flowing through the micro flow path (mixing/reaction flow path) can be accelerated. Also, the temperature sensor may be a sensor using a thermocouple, for example.

The chip-type series unit may include a microfluidic reactor 10 having a mixing/reaction flow path for mixing a plurality of liquids to be mixed and subjecting a reaction component contained in the mixed liquid of the plurality of liquids to be mixed to a reaction and may include a plurality of microfluidic reactors 10. Also, the volume of the mixing/reaction flow path in at least one of the plurality of microfluidic reactors 10 may be different from the volume of the mixing/reaction flow path in another microfluidic reactor 10 of the plurality of microfluidic reactors 10.

The shape of the mixing/reaction flow path is not particularly limited, and the shape may have a meandering shape as in the reaction flow path illustrated in FIG. 2. Also, the number of introduction flow paths of liquid in the micro flow path is not particularly limited, and the number of introduction flow paths may be increased or decreased depending on the number of types of the liquid.

The microfluidic module includes a plurality of chip-type series units, each including at least a plurality of microfluidic reactors 10 connected to each other in series, and the plurality of series units are connected in parallel, but "connection" as used herein means that connection is performed fluidically (hereinafter, also referred to as "fluidic connection"). That is, the series unit of the microfluidic module includes at least a portion in which the plurality of microfluidic reactors 10 are fluidically connected in series. The meaning of "includes at least" as used herein only needs to include a portion where the plurality of microfluidic reactors 10 are connected in series, and means that a part of the series unit may include a portion (section) where the microfluidic reactors 10 are connected in parallel. The number of series units is not particularly limited, and for example, the number of chip series unit provided in the microfluidic module may be a multiple of 2 or a multiple of 3. For example, the number (number of parallel arrangement) of chip series units provided in the microfluidic module may be 2 or more, 4 or more, 6 or more, or 8 or more. The number (number of parallel arrangement) of chip series units provided in the microfluidic module may be the product of 2^{m} and 3ⁿ (where, m and n are integers of 0 or more, respectively). In this case, m may be 3 or more, when the sum of m and n is 2 or more and n equals to 0. The number of parallel arrangement of the series units in the microfluidic module can be appropriately set depending on the type and the amount of the raw material supplied to the microfluidic reactor 10 by a supply device.

The number of microfluidic reactors 10 included in the series unit (for example, the number of microfluidic reactors 10 in series), the arrangement pattern on the board, and the like are not particularly limited.

Next, a mode of connecting the microfluidic reactors 10 in each series unit in series will be described. The mode of connecting each of the series units is not particularly limited, and for example, a discharge port positioned at the downstream end of the micro flow path in the first-stage microfluidic reactor and a supply port positioned at the upstream end of the micro flow path in the second-stage microfluidic reactor may be connected via a coupling conduit. The coupling conduit may have an internal flow path through which a fluid flows.

A supply port of the microfluidic reactor 10 in the k-th stage (when k is 2 or more) and a discharge port of the microfluidic reactor 10 in the (k - 1)-th stage may be connected by a joint. Through the joint, it is possible to liquid-tightly and airtightly communicate (connect) an internal flow path in the coupling conduit and various conduits described later and the micro flow path. The type of the conduit is not particularly limited, but may be a tube having flexibility. The conduit may be formed of, for example, a resin such as polyether ether ketone (PEEK). Such a joint and such a coupling conduit can be used not only for connection between the microfluidic reactors 10 but also for fluidic connection between the series units.

The coupling conduit for coupling the microfluidic reactors 10 mounted on the microfluidic module may be configured by a tube member different from the microfluidic device, but the prevent invention is not limited to this configuration. For example, a micro flow path (microchannel) of the plurality of microfluidic reactors 10 and a flow path (channel) for connecting the micro flow paths of the respective microfluidic reactors 10 may be formed in the board (substrate) of the microfluidic module. That is, the entire microfluidic module may be constructed by a single substrate. In this aspect, a part of a supply conduit for supplying a liquid or a part of a recovery conduit for recovering the liquid may be formed by a flow path (channel) formed in the substrate of the microfluidic module. In this case, the substrate of the microfluidic module may have a multilayer structure, and a layer for forming the micro flow path of each microfluidic reactor 10 and a layer for forming the flow path corresponding to the supply conduit or the recovery conduit may be formed in separate layers.

The microfluidic module may have a board form in which the plurality of microfluidic reactors 10 included in the microfluidic module are mounted on a board, but the present invention is not limited to this example. That is, the microfluidic module only needs to include the plurality of series units connected to each other in parallel, and an aspect thereof is not particularly limited. For example, the microfluidic module may not include the board. In this case, the micro flow paths of the microfluidic reactors 10 connected to each other in series may be fluidically connected to each other via the coupling conduit.

For example, the micro flow paths of the plurality of microfluidic reactors 10 forming each of the series units included in the microfluidic module may be collectively formed in a substrate, and a microfluidic module having a block form may be constructed by stacking such series units, each having a chip form. In the series unit having a chip form, the micro flow paths corresponding to the respective microfluidic reactors 10 may be connected in series. The plurality of microfluidic reactors 10 only needs to be fluidically connected to each other via the coupling conduit, and for example, an aspect in which the coupling conduit is connected to the supply port and the discharge port of each of the microfluidic reactors 10 to be fluidically connected can be exemplified.

In the microfluidic module having a block form, the plurality of series units, each having a chip form, may be stacked, or the series unit may be held in a state of being sandwiched between a pair of holding plates (an upper holding plate, a lower holding plate). Of course, the number of chip series units held between the upper holding plate and the lower holding plate may be two or more. For example, there is an aspect in which the upper holding plate and the lower holding plate are flat plates, each having a rectangular shape, bolt insertion holes are formed at appropriate positions of the plates (for example, four corners of the planes), and the upper holding plate and the lower holding plate are fastened by an appropriate fastener, for example, by a bolt and a nut combined appropriately.

In the microfluidic module having a block form, it is possible to adopt an aspect in which the chip series units, each including openings (for example, the supply port and the discharge port) in the micro flow paths of the microfluidic reactors included in each of the chip series units and the openings being stacked, are connected to each other in a vertical direction. For example, in a first-stage (most upstream) microfluidic device 10A, the supply ports are disposed at positions overlapping each other between the series units, and the supply ports of the microfluidic reactors 10 in each of the series units are connected to each other in parallel. In the upper holding plate, a supply port may be formed at a position overlapping with the respective supply ports in the respective series units, and a discharge port may be formed at a position overlapping with the respective discharge ports in the respective series units. According to such a configuration, the fluid as the raw material can be supplied from each of the supply ports in the upper holding plate to each of the supply ports in each of the series units, and the product from each of the discharge ports in each of the series units can be recovered from the discharge port. According to such a configuration, the respective supply ports and the respective discharge ports in the respective series units can directly communicate with each other without interposing, for example, a tube therebetween.

In the embodiment described above, the reaction acceleration means for accelerating the reaction process of the reaction component contained in the mixed liquid flowing through the micro flow path (mixing/reaction flow path) is not particularly limited, and not only the heater exemplified above, but also another heating means such as a microwave irradiation device may be adopted. As the reaction acceleration means other than the heating means, for example, a light irradiation means, a vibration energy application means, and a voltage application means may be adopted. Examples of the light irradiation means include an LED, an organic light emitting device (OLED), a laser, and an arc lamp. Examples of the vibration energy application means include an ultrasonic generator and a piezoelectric transducer. Examples of the voltage application means include an electrode. The reaction acceleration means may be a combination of the various means described above.

When the microfluidic module is used as a part of the polymer production system, the polymer production system may include a supply device for supplying liquid. The relationship between the supply device and the microfluidic module is not particularly limited, and for example, when the plurality of microfluidic modules are used, supply devices, each corresponding to each of the microfluidic modules, is included, and a liquid containing a material such as a monomer or a polymerization initiator can be supplied to each of the microfluidic modules. The types of liquid supplied to each of the microfluidic modules may be the same or different.

The supply device may include a plurality of supply units, each including a raw material tank that stores, for example, a raw material, a supply conduit, and a pump. In each of the supply units, a supply conduit is connected to the pump, and when the pump is operated, the raw material stored in the raw material tank is pumped (for example, subjected to liquid feeding) to the supply conduit, and the raw material flows through the supply conduit from the upstream to the downstream. When liquid is supplied from the supply unit to the plurality of series units, the liquid can be supplied from the single supply unit to the plurality of series units. However, when the plurality of supply units are used, the liquid may be supplied from each of the supply units to each of the series units different from each other.

The type of the pump is not particularly limited, and examples thereof include a syringe pump or a diaphragm pump. The supply conduit may include a branch conduit branching off from the middle. In this case, the branch conduit is preferably provided in a number corresponding to the number of series units included in each of the microfluidic modules. By adopting such an aspect, the raw material can be supplied to the respective series units in parallel.

When the microfluidic module is used as a part of the polymer production system, the polymer production system may include a recovery device for recovering the polymer (or liquid containing the polymer). The recovery device may recover the polymer that is finally obtained, or may recover the polymer for each microfluidic module, each series unit, or each microfluidic reactor 10. The polymer (or liquid containing the polymer) recovered by the recovery device can be stored in a recovery tank.

When the microfluidic module is used as a part of the polymer production system, the polymer production system may include a control device. For example, the control device may be capable of communicating with, for example, an on-off valve, a flow rate adjusting valve, a flow rate sensor, a pressure sensor, a pump, a heater, and a temperature sensor of each supply unit described above in a wired or wireless manner. The control device receives a status signal output from, for example, the flow rate sensor, the pressure sensor, and the temperature sensor and outputs a control signal for controlling, for example, the on-off valve, the flow rate adjusting valve, the pump, and the heater, based on a reception result of the status signal.

When the plurality of microfluidic modules, each having a board form, are used, the plurality of microfluidic modules may be disposed in multiple stages. For example, a rack can be used to dispose the microfluidic modules in each stage of the rack.

When the plurality of microfluidic modules are disposed in multiple stages using, for example, a rack, an appropriate gap is preferably formed between the microfluidic modules stacked in the vertical direction. In other words, the plurality of microfluidic modules are installed in multiple stages so as to be stacked at intervals in the vertical direction. Of course, the installation mode of such microfluidic modules is an example, and various installation modes can be adopted.

By using the microfluidic module according to the present aspect, the reaction process of the reaction component contained in the mixed liquid can be allowed to proceed in the micro flow paths (mixing/reaction flow paths) of the microfluidic reactors 10 connected to each other in series forming each of the series units, and a desired reaction product can be obtained. In this case, the microfluidic reactors 10 in each of the series units are connected to each other in series, and thus the reaction process in the mixing/reaction flow path can be sequentially, precisely, and finely controlled for each microfluidic reactor 10. For example, by individually setting the heating temperature of the fluid by the heater for each microfluidic reactor 10, the reaction process in the mixing/reaction flow path can be precisely and finely controlled.

The microfluidic module has a series unit in which the reactors 10 are disposed in series, but in the series unit, not only the series disposition but also parallel disposition may be adopted for some of the reactors 10. Although the series units are disposed in parallel, the series units disposed in parallel may be disposed in series.

When the microfluidic module is used as a part of the polymer production system, the polymer production system may include a plurality of blocks CB when the control device, the plurality of microfluidic modules, the supply device for supplying a raw material to the plurality of microfluidic modules, and the recovery device for recovering a product from the plurality of microfluidic modules are collectively regarded as a block CB. In this case, various devices (such as the pump, the on-off valve, and the flow rate adjusting valve) of the supply device belonging to the single block CB are controlled by the corresponding control device, and status signals of various sensors included in the single block CB are input to the corresponding control device. The number of microfluidic modules belonging to the single block CB may be determined depending on an information processing amount such as a control signal output to the various devices (such as the pump, the on-off valve, and the flow rate adjusting valve) controlled by the control device and a status signal input from the various sensors.

Next, the volume of the mixing/reaction flow path in the microfluidic reactor 10 will be described. As described above, in the microfluidic module, the plurality of microfluidic reactors 10 forming the series unit are connected to each other in series, and an additional supply of the reaction raw material is continuously performed in multiple stages in the second and subsequent microfluidic reactors. Thus, the flow rate of the mixed liquid flowing through the mixing/reaction flow path tends to increase as the microfluidic reactor 10 is positioned further downstream in a treatment flow path part in the series unit. In view of such circumstances, from the viewpoint of sufficiently allowing the reaction process in the mixing/reaction flow path to proceed and efficiently yielding the reaction product, it is preferable to ensure a longer residence time of the mixed liquid as the microfluidic reactor 10 is positioned further downstream in the chip series unit.

When the molecular weight of the mixed liquid containing the reaction product, the mixed liquid flowing through the treatment flow path part of the chip series unit, is focused on, the reaction product contained in the mixed liquid flowing through the mixing/reaction flow path tends to have a increased molecular weight and a increased viscosity as the microfluidic chip 10 (microchip reactor) is positioned further downstream in the chip series unit. Thus, from the viewpoint of more uniformly mixing the liquids to be mixed (raw materials) in the mixing/reaction flow path 15, it is preferable to ensure a longer fluid residence time as the microfluidic chip 10 (microchip reactor) is positioned further downstream in the chip series unit.

Thus, in the series unit, when the volumes of the mixing/reaction flow paths of at least two microfluidic reactors 10 connected in series are compared, the volume of the mixing/reaction flow path may be set to be larger as the microfluidic reactor 10 is positioned further downstream. For example, in the series unit, among the plurality of microfluidic reactors 10 connected in series, the volume of the mixing/reaction flow path is set to be larger as the microfluidic reactor 10 is positioned further downstream.

In other words, when a volume V1 of the mixing/reaction flow path 15 in the microfluidic chip 10k positioned on the k-th stage from the upstream among the plurality of microfluidic reactors 10 connected to each other in series in the series unit is denoted as V1k, it is preferable that V1k is smaller than V1(k + 1).

According to the microfluidic module described above, each of the series units has the plurality of microfluidic reactors 10 connected in series are included, and thus a complicated multi-stage unit operation can be realized. In addition, when the microfluidic module is used as a part of the polymer production system, the plurality of series units connected to each other in parallel are included. Thus, numbering-up can be achieved, and the yield of the polymer after the unit operation in each of the series units is performed can be easily increased. That is, by arranging the plurality of series units in parallel, the production amount (industrial production amount) of the final product subjected to the unit operation processing can be ensured. Such a large-scale polymer production system in which microfluidic reactors 10 are combined in series and parallel can be referred to as a desktop chemical plant.

As described above, the technique described above can be specified as a numbering-up method. That is, the numbering-up method is a numbering-up method for performing numbering-up by increasing the number of series units (number of parallel arrangement) in the microfluidic module. The technique described above can also be specified as a method for designing a microfluidic module. That is, the method for designing a microfluidic module is a method for designing a microfluidic module in which the number of parallel arrangement in the series units is determined depending on a target production amount (target product amount) of a final product subjected to the unit operation processing, the final product being obtained in the microfluidic module. The final product subjected to the unit operation referred to herein is a final product produced by performing a unit operation on a fluid in each series unit disposed in (the board in) the microfluidic module. The target production amount is a target production amount (target product amount) of a final product in each microfluidic module, and the number of parallel arrangement in the series units disposed in (the board in) the microfluidic module is determined depending on the target production amount (target product amount). Thus, a final product that meets the target production amount (target product amount) can be obtained for each microfluidic module.

Further, the microfluidic module described above has a board form, and thus the entire system can be made compact even though numbering-up is performed to the number of microfluidic modules included in the system. For example, even when the plurality of microfluidic modules are installed in the rack exemplified above, the microfluidic modules in the board form do not increase the installation space, and more microfluidic modules can be installed in a limited space. That is, by stacking the plurality of microfluidic modules on one another, each having a board form, and disposing the microfluidic modules in multiple stages (hierarchically), numbering-up is facilitated, and the yield of the product can be easily increased. That is, by subjecting the plurality of microfluidic modules having a board form to numbering-up in multiple stages, it is possible to simultaneously achieve a high level of unit operation as a highly accurate chemical/physical process by the series unit and mass production of products. That is, the technique according to the present aspect can also be specified as a numbering-up method for performing numbering-up by increasing the number of microfluidic modules in the system. In addition, the technique according to the present aspect can be specified as a system design method for identifying the number of microfluidic modules depending on a target production amount of the final product subjected to the unit operation processing, the final product being obtained in the plurality of microfluidic modules in the system. The final product subjected to the unit operation processing is as described above. Here, the target production amount of the final product is the total amount (total amount) of the final product obtained in the plurality of microfluidic modules, and is the sum of the final products obtained in the individual microfluidic modules. In other words, the target production amount can be regarded as the sum of the final products in the entire system. In this manner, by identifying the number of microfluidic modules included in the system depending on the target production amount (target product amount) of the final product when viewed in the entire system, the final product that meets the target production amount (target product amount) can be obtained in the entire system.

Further, in the microfluidic module, the microfluidic reactors 10 of the respective stages in the respective series units may be connected in parallel through branch conduits in the respective supply units, in the relationship between the series units. In this case, even though the number of series units mounted on the board of the microfluidic module increases, the number of the various devices (such as the pump, the on-off valve, and the flow rate adjusting valve) for supplying the raw material from the supply device to the respective series units can be reduced, and the construction cost of the system can be reduced.

In addition, in the system according to the present aspect, an aspect can also be adopted in which no intermediate tank for storing the raw material is provided in the middle of the supply conduit in each supply unit in the supply device or in the middle of the coupling conduit for connecting the microfluidic reactors 10 in the series unit. In this case, it is possible to avoid inconveniences such as an unnecessary reaction (change) in the intermediate tank, an increase in the operation start-up time of the system, and an increase in the number of tanks (the number of devices). In addition, by suppressing the increase in the number of tanks, it is possible to reduce the amount of solvent to be used when the tank is cleaned regularly or irregularly.

In addition, in the system according to the present aspect, the microfluidic module is in a board form, and thus can be easily replaced for each microfluidic module (board), which is excellent in maintainability. That is, in the system of the present aspect, an on-off valve may be provided for each supply conduit in each supply unit of the supply device. In the case of such an aspect, when occurrence of an abnormality in any of the microfluidic modules is detected during the operation of the system, the supply of the raw material to the microfluidic module in which the abnormality is detected can be stopped by operating the on-off valve and closing the flow path of the main flow conduit part. Thus, it is possible to easily inspect the microfluidic module in which the abnormality is detected or replace such a microfluidic module with a spare (new) microfluidic module.

As described above, the technique according to the present aspect can also be regarded as a maintenance method in the system. That is, the maintenance method in the system is a maintenance method including stopping supply of a fluid as a raw material to a microfluidic module with an abnormality being detected when the abnormality is detected in any of a plurality of microfluidic modules included in the system, and replacing the microfluidic module with the abnormality being detected with a new (another) microfluidic module. Thus, when an abnormality (such as blockage, leakage, and flow rate fluctuation) has occurred in some of the microfluidic modules, the performance of the other normal microfluidic modules is not affected, and the abnormal microfluidic module can be easily replaced with a new one without stopping the operation of the entire system. From such characteristics, a non-stop continuous operation system can be realized. In addition, the independent operation of the microfluidic module can improve reliability, monitoring performance, and maintainability of numbering-up of the microfluidic module.

The larger the volume of the mixing/reaction flow path in the microfluidic reactor 10, the longer the residence time of the mixed liquid flowing through the mixing/reaction flow path is ensured. Thus, by defining the volume of the mixing/reaction flow path as described above, the residence time of the mixed liquid flowing through the mixing/reaction flow path is ensured even in the microfluidic reactor 10 disposed further downstream in the series unit, and thus the reaction product can be efficiently obtained. In addition, even when the viscosity of the mixed liquid flowing through the mixing/reaction flow path of the microfluidic reactor 10 disposed further downstream increases, uniform mixing is easily obtained by ensuring the residence time.

In addition, according to the aspect described above, the volume of the mixing/reaction flow path is set to be smaller for the microfluidic reactor 10 positioned further upstream in the series unit, and thus the residence time of the fluid is shortened. Accordingly, an excessive increase of the molecular weight of the reaction product produced in the microfluidic reactor 10 positioned at the side of the upstream in the series unit can be suppressed, and as a result, the molecular weight distribution of the product finally recovered by the recovery device can be narrowed.

### Method for Producing Composition

Another embodiment of the present disclosure is a method for producing a composition, specifically, a method for yielding a composition using the polymer produced by the method for producing a polymer described above, the method including a mixing step of mixing the polymer produced by the method for producing a polymer described above with another substance. The method for producing a composition may include a step other than the mixing step.

The form of the composition is not particularly limited, and the composition may be a solid or a liquid.

In the mixing step, the method for mixing the polymer and the another substance is not particularly limited, and a known method can be adopted.

The another substance mixed with the polymer is not particularly limited, and can be appropriately selected depending on the application. Examples thereof include polymers other than the polymer obtained by the method for producing a polymer described above, various additives, and solvents.

### Method For Producing Molded Article

Another embodiment of the present disclosure is a method for producing a molded article, and specifically, is a method for producing a molded article, the method including molding a polymer produced by the method for producing a polymer described above or a composition produced by the method for producing a composition described above (hereinafter, also simply referred to as a "method for producing a molded article"). According to this production method, a molded article of the polymer having a desired molecular weight distribution can be obtained.

The method for molding a polymer is not particularly limited, and examples thereof include a method of dissolving a polymer in a solvent or dispersing the polymer in a dispersion medium. and then molding the polymer in a desired molding die by removing the solvent or the dispersion medium; a method of mixing a polymer with a curing agent, allowing the mixture to proceed a curing reaction, and molding the mixture in a desired molding die; a method of introducing a polymer softened by, for example, heating into a desired molding die, and then cooling and molding the polymer; and a method of allowing a polymer to proceed a curing reaction and molding the polymer in a desired molding die, when the polymer has a functional group that reacts by heat or light or when a functional group that reacts with heat or light is introduced into the polymer.

These methods can be performed by a known method or by combining known methods.

### Examples

Hereinafter, the invention according to the present disclosure will be further specifically described with reference to Examples. The invention according to the present disclosure is not to be construed as being limited to the following Examples.

### Production of Polymer

In Examples 1 and 2, an experiment was actually performed based on the following description of each Example. In Examples 3 to 6, an experiment was performed using a simulation software (Aspen Plus available from Aspen Technology Inc.) based on the following description of each Example.

### Example 1

A polymer production system adopted in this Example to produce a polymer is the polymer production system illustrated in FIG. 2. Some raw material tanks and liquid feeding pumps were not used. Specifically, the polymer production system is
a microfluidic system including a plurality of vessels (hereinafter, it may be referred to as a "reactor"), each having a micro flow path formed therein,
the microfluidic system including a plurality of reaction means, each including:
   an introduction part for introducing at least one of a plurality of liquids to be mixed into a predetermined treatment flow path to mix the plurality of liquids to be mixed in the predetermined treatment flow path; and
   a reaction flow path that is disposed downstream of the introduction part and formed in the microfluidic vessel as a micro flow path forming a part of the predetermined treatment flow path, the reaction flow path allowing a chemical reaction of a reactant contained in a mixed liquid of the plurality of liquids to be mixed to proceed,
   wherein
   the plurality of reaction means are disposed in series such that the reaction flow paths of the plurality of reaction means communicate with each other.

For the reactor 101, the flow path widths of the first flow path 2 and the first introduction flow path 3 were set to 100 µm, the flow path length from the introduction part 25 to the discharge port 22 of the first flow path 2 was set to 1600 mm (flow path volume: 33.0 µL), and syringe pumps YSP-301 (manufactured by YMC CO., LTD.) were used as the liquid feeding pumps 40a and 40b. To the raw material tank 30a, a liquid (liquid 1a, solvent concentration; 58.0 mass%) containing dimethyl-2,2-azobis(2-methylpropionate) (V-601; manufactured by FUJIFILM Wako Pure Chemical Corporation; polymerization initiator) dissolved in propylene glycol monomethyl ether acetate (MMPGAC; manufactured by FUJIFILM Wako Pure Chemical Corporation; boiling point: 145°C, melting point: lower than -10°C, specific gravity: 0.97; solvent) such that the concentration of dimethyl-2,2-azobis(2-methylpropionate) was 42.0 mass% was introduced. To the raw material tank 30b, a liquid (liquid 1b, solvent concentration; 80.0 mass%) containing methyl methacrylate (MMA; manufactured by FUJIFILM Wako Pure Chemical Corporation; boiling point: 101°C, melting point: -48°C, specific gravity: 0.94) and phenyl methacrylate (PhMA; manufactured by FUJIFILM Wako Pure Chemical Corporation; boiling point: 198°C, melting point: -17°C, specific gravity: 1.06) dissolved in propylene glycol monomethyl ether acetate (the same as MMPGAC described above) such that the concentration of methyl methacrylate was 9.8 mass% and the concentration of phenyl methacrylate was 10.2 mass% was introduced. The liquid 1a and the liquid 1b were introduced into an introduction part 65 at flow rates of 0.40 µL/min and 1.98 µL/min, respectively, and a polymerization reaction of the monomers was performed at a polymerization reaction temperature (temperature of the heater 20) of 75 ± 2°C.

The step using the above reactor 101 is the polymerization step according to the method for producing a polymer according to the embodiment described above.

For the reactor 102, the flow path widths of the first flow path 2 and the first introduction flow path 3 were set to 100 µm, the flow path length from the introduction part 25 to the discharge port 22 of the first flow path 2 was set to 2197 mm (flow path volume: 45.5 µL), and a syringe pump YSP-301 (manufactured by YMC CO., LTD.) was used as the liquid feeding pump 40b. To the raw material tank 30b, a liquid (liquid 1c, solvent concentration; 85.0 mass%) containing phenyl methacrylate (PhMA; manufactured by FUJIFILM Wako Pure Chemical Corporation; boiling point: 198°C, melting point: -17°C, specific gravity: 1.06) dissolved in propylene glycol monomethyl ether acetate (the same as MMPGAC described above) such that the concentration of phenyl methacrylate was 15.0 mass% was introduced. The liquid 1c was introduced into the introduction part 25 at a flow rate of 0.28 µL/min, and a polymerization reaction of the monomers was performed at a polymerization reaction temperature (temperature of the heater 20) of 75 ± 2°C.

The step using the reactor 102 is the (first) additional polymerization step according to the method for producing a polymer of the embodiment described above.

For the reactor 103, the flow path widths of the first flow path 2 and the first introduction flow path 4 were set to 100 µm, the flow path length from the introduction part 25 to the discharge port 22 of the first flow path 2 was set to 2604 mm (flow path volume: 54.0 µL), and a syringe pump YSP-301 (manufactured by YMC CO., LTD.) was used as the liquid feeding pump 40b. To the raw material tank 30b, a liquid (liquid 1d, solvent concentration; 85.0 mass%) containing phenyl methacrylate (PhMA; manufactured by FUJIFILM Wako Pure Chemical Corporation; boiling point: 198°C, melting point: -17°C, specific gravity: 1.06) dissolved in propylene glycol monomethyl ether acetate (the same as MMPGAC described above) such that the concentration of phenyl methacrylate was 15.0 mass% was introduced. The liquid 1d was introduced into a introduction part 65 at a flow rate of 0.18 µL/min, and a polymerization reaction of the monomers was performed at a polymerization reaction temperature (temperature of the heater 20) of 75 ± 2°C.

The step using the reactor 103 is the (second) additional polymerization step according to the method for producing a polymer of the embodiment described above.

For the reactor 104 (in FIG. 2, the reactor 10N, where N equals to 4), the flow path widths of the first flow path 2 and the first introduction flow path 3 were set to 100 µm, the flow path length from the introduction part 25 to the discharge port 22 of the first flow path 2 was set to 2895 mm (flow path volume: 60.0 µL), and a syringe pump YSP-301 (manufactured by YMC CO., LTD.) was used as the liquid feeding pump 40b. To the raw material tank 30b, a liquid (liquid 1e, solvent concentration; 85.00 mass%) containing phenyl methacrylate (PhMA; manufactured by FUJIFILM Wako Pure Chemical Corporation; boiling point: 198°C, melting point: -17°C, specific gravity: 1.06) dissolved in propylene glycol monomethyl ether acetate (the same as MMPGAC described above) such that the concentration of phenyl methacrylate was 15.0 mass% was introduced. The liquid 1e was introduced into the introduction part 25 at a flow rate of 0.11 µL/min and a polymerization reaction of the monomers was performed at a polymerization reaction temperature (temperature of the heater 20) of 75 ± 2°C.

The step using the reactor 104 is the (third) additional polymerization step according to the method for producing a polymer of the embodiment described above.

The flow path width of each of the conduits that connect the respective reactors, such as the conduit 60c, was set to 0.26 mm.

A copolymer of methyl methacrylate and phenyl methacrylate (random copolymer) was produced using the polymer production system described above.

### Example 2

A polymer production system adopted in this Example to produce a polymer is the polymer production system illustrated in FIG. 2 as in Example 1 described above.

For the reactor 101, the flow path widths of the first flow path 2 and the first introduction flow path 3 were set to 100 µm, the flow path length from the introduction part 25 to the discharge port 22 of the first flow path 2 was set to 1600 mm (flow path volume: 33.0 µL), and syringe pumps YSP-301 (manufactured by YMC CO., LTD.) were used as the liquid feeding pumps 40a and 40b. To the raw material tank 30a, a liquid (liquid 2a, solvent concentration; 85.8 mass%) containing dimethyl-2,2-azobis(2-methylpropionate) (V-601; manufactured by FUJIFILM Wako Pure Chemical Corporation; polymerization initiator) dissolved in propylene glycol monomethyl ether acetate (MMPGAC; manufactured by FUJIFILM Wako Pure Chemical Corporation; boiling point: 145°C, melting point: lower than -10°C, specific gravity: 0.97; solvent) such that the concentration of the radical polymerization initiator was 14.2 mass% was introduced. To the raw material tank 30b, a liquid (liquid 2b, solvent concentration; 79.11 mass%) containing methyl methacrylate (MMA; manufactured by FUJIFILM Wako Pure Chemical Corporation; boiling point: 101°C, melting point: -48°C, specific gravity: 0.94) and phenyl methacrylate (PhMA; manufactured by FUJIFILM Wako Pure Chemical Corporation; boiling point: 198°C, melting point: -17°C, specific gravity: 1.06) dissolved in propylene glycol monomethyl ether acetate (the same as MMPGAC described above) such the concentration of methyl methacrylate was 9.46 mass% and the concentration of phenyl methacrylate was 11.43 mass% was introduced. The liquid 2a and the liquid 2b were introduced into the introduction part 25 at flow rates of 1.18 µL/min and 1.16 µL/min, respectively, and a polymerization reaction of the monomers was performed at a polymerization reaction temperature (temperature of the heater 20) of 75 ± 2°C.

The step using the above reactor 101 is the polymerization step according to the method for producing a polymer according to the embodiment described above.

For the reactor 102, the flow path widths of the first flow path 2 and the first introduction flow path 3 were set to 100 µm, the flow path length from the introduction part 25 to the discharge port 22 of the first flow path 2 was set to 2197 mm (flow path volume: 45.5.0 µL), and a syringe pump YSP-301 (manufactured by YMC CO., LTD.) was used as the liquid feeding pump 40b. To the raw material tank 30b, a liquid (liquid 2c, solvent concentration; 80.00 mass%) containing methyl methacrylate (MMA; manufactured by FUJIFILM Wako Pure Chemical Corporation; boiling point: 101°C, melting point: -48°C, specific gravity: 0.94) and phenyl methacrylate (PhMA; manufactured by FUJIFILM Wako Pure Chemical Corporation; boiling point: 198°C, melting point: -17°C, specific gravity: 1.06) dissolved in propylene glycol monomethyl ether acetate (the same as MMPGAC described above) such that the concentration of methyl methacrylate was 7.90 mass% and the concentration of phenyl methacrylate was 12.10 mass% was introduced. The liquid 2c was introduced into the introduction part 25 at a flow rate of 0.72 µL/min, and a polymerization reaction of the monomers was performed at a polymerization reaction temperature (temperature of the heater 20) of 75 ± 2°C.

The step using the reactor 102 is the (first) additional polymerization step according to the method for producing a polymer of the embodiment described above.

For the reactor 103, the flow path widths of the first flow path 2 and the first introduction flow path 3 were set to 100 µm, the flow path length from the introduction part 25 to the discharge port 22 of the first flow path 2 was set to 2604 mm (flow path volume: 54.0 µL), and a syringe pump YSP-301 (manufactured by YMC CO., LTD.) was used as the liquid feeding pump 40b. To the raw material tank 30b, a liquid (liquid 2d, solvent concentration; 80.00 mass%) containing methyl methacrylate (MMA; manufactured by FUJIFILM Wako Pure Chemical Corporation; boiling point: 101°C, melting point: -48°C, specific gravity: 0.94) and phenyl methacrylate (PhMA; manufactured by FUJIFILM Wako Pure Chemical Corporation; boiling point: 198°C, melting point: -17°C, specific gravity: 1.06) dissolved in propylene glycol monomethyl ether acetate (the same as MMPGAC described above) such that the concentration of methyl methacrylate was 7.90 mass% and the concentration of phenyl methacrylate was 12.10 mass% was introduced. The liquid 2d was introduced into the introduction part 25 at a flow rate of 0.66 µL/min, and a polymerization reaction of the monomers was performed at a polymerization reaction temperature (temperature of the heater 20) of 75 ± 2°C.

The step using the reactor 103 is the (second) additional polymerization step according to the method for producing a polymer of the embodiment described above.

For the reactor 104 (in FIG. 2, the reactor 10N, where N equals to 4), the flow path widths of the first flow path 2 and the first introduction flow path 3 were set to 100 µm, the flow path length from the introduction part 25 to the discharge port 22 of the first flow path 2 was set to 2895 mm (flow path volume: 60.0 µL), and a syringe pump YSP-301 (manufactured by YMC CO., LTD.) was used as the liquid feeding pump 40b. To the raw material tank 30b, a liquid (liquid 2e, solvent concentration; 80.00 mass%) containing methyl methacrylate (MMA; manufactured by FUJIFILM Wako Pure Chemical Corporation; boiling point: 101°C, melting point: -48°C, specific gravity: 0.94) and phenyl methacrylate (PhMA; manufactured by FUJIFILM Wako Pure Chemical Corporation; boiling point: 198°C, melting point: -17°C, specific gravity: 1.06) dissolved in propylene glycol monomethyl ether acetate (the same as MMPGAC described above) such that the concentration of methyl methacrylate was 7.90 mass% and the concentration of phenyl methacrylate was 12.10 mass% was introduced. The liquid 2e was introduced into the introduction part 25 at a flow rate of 0.58 µL/min, and a polymerization reaction of the monomers was performed at a polymerization reaction temperature (temperature of the heater 20) of 75 ± 2°C.

The step using the reactor 104 is the (third) additional polymerization step according to the method for producing a polymer of the embodiment described above.

The flow path width of each of the conduits that connect the respective reactors, such as the conduit 60c, was set to 0.26 mm.

A copolymer of methyl methacrylate and phenyl methacrylate (random copolymer) was produced using the polymer production system described above.

### Example 3

A polymer production system adopted in this Example to produce a polymer is the polymer production system illustrated in FIG. 2 as in Example 1 described above.

For the reactor 301, the flow path widths of the first flow path 2 and the first introduction flow path 3 were set to 100 µm, the flow path length from the introduction part 25 to the discharge port 22 of the first flow path 2 was set to 1600 mm (flow path volume: 33.0 µL), and syringe pumps YSP-301 (manufactured by YMC CO., LTD.) were used as the liquid feeding pumps 40a and 40b. To the raw material tank 30a, a liquid (liquid 3a, solvent concentration; 50.0 mass%) containing dimethyl-2,2-azobis(2-methylpropionate) (V-601; manufactured by FUJIFILM Wako Pure Chemical Corporation; polymerization initiator) dissolved in propylene glycol monomethyl ether acetate (MMPGAC; manufactured by FUJIFILM Wako Pure Chemical Corporation; boiling point: 145°C, melting point: lower than -10°C, specific gravity: 0.97; solvent) such that the concentration of the radical polymerization initiator was 50.0 mass% was introduced. To the raw material tank 30b, a liquid (liquid 3b, solvent concentration; 74.5 mass%) containing methyl methacrylate (MMA; manufactured by FUJIFILM Wako Pure Chemical Corporation; boiling point: 101°C, melting point: -48°C, specific gravity: 0.94) and phenyl methacrylate (PhMA; manufactured by FUJIFILM Wako Pure Chemical Corporation; boiling point: 198°C, melting point: -17°C, specific gravity: 1.06) dissolved in propylene glycol monomethyl ether acetate (the same as MMPGAC described above) such that the concentration of methyl methacrylate was 10.0 mass% and the concentration of phenyl methacrylate was 15.5 mass% was introduced. The liquid 3a and the liquid 3b were introduced into the introduction part 25 at flow rates of 0.81 µL/min and 3.09 µL/min, respectively, and a polymerization reaction of the monomers was performed at a polymerization reaction temperature (temperature of the heater 20) of 70 ± 2°C.

The step using the above reactor 101 is the polymerization step according to the method for producing a polymer according to the embodiment described above.

For the reactor 102, the flow path widths of the first flow path 2 and the first introduction flow path 3 were set to 100 µm, the flow path length from the introduction part 25 to the discharge port 22 of the first flow path 2 was set to 2197 mm (flow path volume: 45.5 µL), and a syringe pump YSP-301 (manufactured by YMC CO., LTD.) was used as the liquid feeding pump 40b. To the raw material tank 30b, a liquid (liquid 3c, solvent concentration; 85.0 mass%) containing phenyl methacrylate (PhMA; manufactured by FUJIFILM Wako Pure Chemical Corporation; boiling point: 198°C, melting point: -17°C, specific gravity: 1.06) dissolved in propylene glycol monomethyl ether acetate (the same as MMPGAC described above) such that the concentration of phenyl methacrylate was 15.0 mass% was introduced. The liquid 3c was introduced into the introduction part 25 at a flow rate of 0.001 µL/min, and a polymerization reaction of the monomers was performed at a polymerization reaction temperature (temperature of the heater 20) of 75 ± 2°C.

The step using the reactor 102 is the (first) additional polymerization step according to the method for producing a polymer of the embodiment described above.

For the reactor 103, the flow path widths of the first flow path 2 and the first introduction flow path 3 were set to 100 µm, the flow path length from the introduction part 25 to the discharge port 22 of the first flow path 2 was set to 2604 mm (flow path volume: 54.0 µL), and a syringe pump YSP-301 (manufactured by YMC CO., LTD.) was used as the liquid feeding pump 40b. To the raw material tank 30b, a liquid (liquid 3d, solvent concentration; 85.00 mass%) containing phenyl methacrylate (PhMA; manufactured by FUJIFILM Wako Pure Chemical Corporation; boiling point: 198°C, melting point: -17°C, specific gravity: 1.06) dissolved in propylene glycol monomethyl ether acetate (the same as MMPGAC described above) such that the concentration of phenyl methacrylate was 15.0 mass% was introduced. The liquid 3d was introduced into the introduction part 25 at a flow rate of 0.001 µL/min, and a polymerization reaction of the monomers was performed at a polymerization reaction temperature (temperature of the heater 20) of 80 ± 2°C.

The step using the reactor 103 is the (second) additional polymerization step according to the method for producing a polymer of the embodiment described above.

For the reactor 104 (in FIG. 2, the reactor 10N, where N equals to 4), the flow path widths of the first flow path 2 and the first introduction flow path 3 were set to 100 µm, the flow path length from the introduction part 25 to the discharge port 22 of the first flow path 2 was set to 2895 mm (flow path volume: 60.0 µL), and a syringe pump YSP-301 (manufactured by YMC CO., LTD.) was used as the liquid feeding pump 40b. To the raw material tank 30b, a liquid (liquid 3e, solvent concentration; 85.00 mass%) containing phenyl methacrylate (PhMA; manufactured by FUJIFILM Wako Pure Chemical Corporation; boiling point: 198°C, melting point: -17°C, specific gravity: 1.06) dissolved in propylene glycol monomethyl ether acetate (the same as MMPGAC described above) such that the concentration of phenyl methacrylate was 15.0 mass% was introduced. The liquid 3e was introduced into the introduction part 25 at a flow rate of 0.001 µL/min, and a polymerization reaction of the monomers was performed at a polymerization reaction temperature (temperature of the heater 20) of 85 ± 2°C.

The step using the reactor 104 is the (third) additional polymerization step according to the method for producing a polymer of the embodiment described above.

The flow path width of each of the conduits that connect the respective reactors, such as the conduit 60c, was set to 0.26 mm.

A copolymer of methyl methacrylate and phenyl methacrylate (random copolymer) was produced using the polymer production system described above.

### Example 4

A polymer production system adopted in this Example to produce a polymer is the polymer production system illustrated in FIG. 2 as in Example 1 described above.

For the reactor 101, the flow path widths of the first flow path 2 and the first introduction flow path 3 were set to 100 µm, the flow path length from the introduction part 25 to the discharge port 22 of the first flow path 2 was set to 1600 mm (flow path volume: 33.0 µL), and syringe pumps YSP-301 (manufactured by YMC CO., LTD.) were used as the liquid feeding pumps 40a and 40b. To the raw material tank 30a, a liquid (liquid 4a, solvent concentration; 50.0 mass%) containing dimethyl-2,2-azobis(2-methylpropionate) (V-601; manufactured by FUJIFILM Wako Pure Chemical Corporation; polymerization initiator) dissolved in propylene glycol monomethyl ether acetate (MMPGAC; manufactured by FUJIFILM Wako Pure Chemical Corporation; boiling point: 145°C, melting point: lower than -10°C, specific gravity: 0.97; solvent) such that the concentration of the radical polymerization initiator was 50.0 mass% was introduced. To the raw material tank 30b, a liquid (liquid 4b, solvent concentration; 73.5 mass%) containing methyl methacrylate (MMA; manufactured by FUJIFILM Wako Pure Chemical Corporation; boiling point: 101°C, melting point: -48°C, specific gravity: 0.94) and phenyl methacrylate (PhMA; manufactured by FUJIFILM Wako Pure Chemical Corporation; boiling point: 198°C, melting point: -17°C, specific gravity: 1.06) dissolved in propylene glycol monomethyl ether acetate (the same as MMPGAC described above) such that the concentration of methyl methacrylate was 11.0 mass% and the concentration of phenyl methacrylate was 15.5 mass% was introduced. The liquid 4a and the liquid 4b were introduced into the introduction part 25 at flow rates of 0.89 µL/min and 3.09 µL/min, respectively, and a polymerization reaction of the monomers was performed at a polymerization reaction temperature (temperature of the heater 20) of 75 ± 2°C.

The step using the above reactor 101 is the polymerization step according to the method for producing a polymer according to the embodiment described above.

For the reactor 102, the flow path widths of the first flow path 2 and the first introduction flow path 3 were set to 100 µm, the flow path length from the introduction part 25 to the discharge port 22 of the first flow path 2 was set to 2197 mm (flow path volume: 45.5 µL), and a syringe pump YSP-301 (manufactured by YMC CO., LTD.) was used as the liquid feeding pump 40b. To the raw material tank 30b, a liquid (liquid 4c, solvent concentration; 85.0 mass%) containing phenyl methacrylate (PhMA; manufactured by FUJIFILM Wako Pure Chemical Corporation; boiling point: 198°C, melting point: -17°C, specific gravity: 1.06) dissolved in propylene glycol monomethyl ether acetate (the same as MMPGAC described above) such that the concentration of phenyl methacrylate was 15.0 mass% was introduced. The liquid 4c was introduced into the introduction part 25 at a flow rate of 0.001 µL/min, and a polymerization reaction of the monomers was performed at a polymerization reaction temperature (temperature of the heater 20) of 75 ± 2°C.

The step using the reactor 102 is the (first) additional polymerization step according to the method for producing a polymer of the embodiment described above.

For the reactor 103, the flow path widths of the first flow path 2 and the first introduction flow path 3 were set to 100 µm, the flow path length from the introduction part 25 to the discharge port 22 of the first flow path 2 was set to 2604 mm (flow path volume: 54.0 µL), and a syringe pump YSP-301 (manufactured by YMC CO., LTD.) was used as the liquid feeding pump 40b. To the raw material tank 30b, a liquid (liquid 4d, solvent concentration; 85.00 mass%) containing phenyl methacrylate (PhMA; manufactured by FUJIFILM Wako Pure Chemical Corporation; boiling point: 198°C, melting point: -17°C, specific gravity: 1.06) dissolved in propylene glycol monomethyl ether acetate (the same as MMPGAC described above) such that the concentration of phenyl methacrylate was 15.0 mass% was introduced. The liquid 4d was introduced into the introduction part 25 at a flow rate of 0.001 µL/min, and a polymerization reaction of the monomers was performed at a polymerization reaction temperature (temperature of the heater 20) of 75 ± 2°C.

The step using the reactor 103 is the (second) additional polymerization step according to the method for producing a polymer of the embodiment described above.

For the reactor 104 (in FIG. 2, the reactor 10N, where N equals to 4), the flow path widths of the first flow path 2 and the first introduction flow path 3 were set to 100 µm, the flow path length from the introduction part 25 to the discharge port 22 of the first flow path 2 was set to 2895 mm (flow path volume: 60.0 µL), and a syringe pump YSP-301 (manufactured by YMC CO., LTD.) was used as the liquid feeding pump 40b. To the raw material tank 30b, a liquid (liquid 4e, solvent concentration; 85.00 mass%) containing phenyl methacrylate (PhMA; manufactured by FUJIFILM Wako Pure Chemical Corporation; boiling point: 198°C, melting point: -17°C, specific gravity: 1.06) dissolved in propylene glycol monomethyl ether acetate (the same as MMPGAC described above) such that the concentration of phenyl methacrylate was 15.0 mass% was introduced. The liquid 4e was introduced into the introduction part 25 at a flow rate of 0.001 µL/min, and a polymerization reaction of the monomers was performed at a polymerization reaction temperature (temperature of the heater 20) of 75 ± 2°C.

The step using the reactor 104 is the (third) additional polymerization step according to the method for producing a polymer of the embodiment described above.

The flow path width of each of the conduits that connect the respective reactors, such as the conduit 60c, was set to 0.26 mm.

A copolymer of methyl methacrylate and phenyl methacrylate (random copolymer) was produced using the polymer production system described above.

### Example 5

A polymer production system adopted in this Example to produce a polymer is the polymer production system illustrated in FIG. 2 as in Example 1 described above.

For the reactor 101, the flow path widths of the first flow path 2 and the first introduction flow path 3 were set to 100 µm, the flow path length from the introduction part 25 to the discharge port 22 of the first flow path 2 was set to 1600 mm (flow path volume: 33.0 µL), and syringe pumps YSP-301 (manufactured by YMC CO., LTD.) were used as the liquid feeding pumps 40a and 40b. To the raw material tank 30a, a liquid (liquid 5a, solvent concentration; 50.0 mass%) containing dimethyl-2,2-azobis(2-methylpropionate) (V-601; manufactured by FUJIFILM Wako Pure Chemical Corporation; polymerization initiator) dissolved in propylene glycol monomethyl ether acetate (MMPGAC; manufactured by FUJIFILM Wako Pure Chemical Corporation; boiling point: 145°C, melting point: lower than -10°C, specific gravity: 0.97; solvent) such that the concentration of the radical polymerization initiator was 50.0 mass% was introduced. To the raw material tank 30b, a liquid (liquid 5b, solvent concentration; 73.5 mass%) containing methyl methacrylate (MMA; manufactured by FUJIFILM Wako Pure Chemical Corporation; boiling point: 101°C, melting point: -48°C, specific gravity: 0.94) and phenyl methacrylate (PhMA; manufactured by FUJIFILM Wako Pure Chemical Corporation; boiling point: 198°C, melting point: -17°C, specific gravity: 1.06) dissolved in propylene glycol monomethyl ether acetate (the same as MMPGAC described above) such that the concentration of methyl methacrylate was 11.0 mass% and the concentration of phenyl methacrylate was 15.5 mass% was introduced. The liquid 5a and the liquid 5b were introduced into the introduction part 25 at flow rates of 0.87 µL/min and 3.09 µL/min, respectively, and a polymerization reaction of the monomers was performed at a polymerization reaction temperature (temperature of the heater 20) of 73 ± 2°C.

The step using the above reactor 101 is the polymerization step according to the method for producing a polymer according to the embodiment described above.

For the reactor 102, the flow path widths of the first flow path 2 and the first introduction flow path 3 were set to 100 µm, the flow path length from the introduction part 25 to the discharge port 22 of the first flow path 2 was set to 2197 mm (flow path volume: 45.5 µL), and a syringe pump YSP-301 (manufactured by YMC CO., LTD.) was used as the liquid feeding pump 40b. To the raw material tank 30b, a liquid (liquid 5c, solvent concentration; 85.0 mass%) containing phenyl methacrylate (PhMA; manufactured by FUJIFILM Wako Pure Chemical Corporation; boiling point: 198°C, melting point: -17°C, specific gravity: 1.06) dissolved in propylene glycol monomethyl ether acetate (the same as MMPGAC described above) such that the concentration of phenyl methacrylate was 15.0 mass% was introduced. The liquid 5c was introduced into the introduction part 25 at a flow rate of 0.001 µL/min, and a polymerization reaction of the monomers was performed at a polymerization reaction temperature (temperature of the heater 20) of 75 ± 2°C.

The step using the reactor 102 is the (first) additional polymerization step according to the method for producing a polymer of the embodiment described above.

For the reactor 103, the flow path widths of the first flow path 2 and the first introduction flow path 3 were set to 100 µm, the flow path length from the introduction part 25 to the discharge port 22 of the first flow path 2 was set to 2604 mm (flow path volume: 54.0 µL), and a syringe pump YSP-301 (manufactured by YMC CO., LTD.) was used as the liquid feeding pump 40b. To the raw material tank 30b, a liquid (liquid 5d, solvent concentration; 85.00 mass%) containing phenyl methacrylate (PhMA; manufactured by FUJIFILM Wako Pure Chemical Corporation; boiling point: 198°C, melting point: -17°C, specific gravity: 1.06) dissolved in propylene glycol monomethyl ether acetate (the same as MMPGAC described above) such that the concentration of phenyl methacrylate was 15.0 mass% was introduced. The liquid 5d was introduced into the introduction part 25 at a flow rate of 0.001 µL/min, and a polymerization reaction of the monomers was performed at a polymerization reaction temperature (temperature of the heater 20) of 77 ± 2°C.

The step using the reactor 103 is the (second) additional polymerization step according to the method for producing a polymer of the embodiment described above.

For the reactor 104 (in FIG. 2, the reactor 10N, where N equals to 4), the flow path widths of the first flow path 2 and the first introduction flow path 3 were set to 100 µm, the flow path length from the introduction part 25 to the discharge port 22 of the first flow path 2 was set to 2895 mm (flow path volume: 60.0 µL), and a syringe pump YSP-301 (manufactured by YMC CO., LTD.) was used as the liquid feeding pump 40b. To the raw material tank 30b, a liquid (liquid 5e, solvent concentration; 85.00 mass%) containing phenyl methacrylate (PhMA; manufactured by FUJIFILM Wako Pure Chemical Corporation; boiling point: 198°C, melting point: -17°C, specific gravity: 1.06) dissolved in propylene glycol monomethyl ether acetate (the same as MMPGAC described above) such that the concentration of phenyl methacrylate was 15.0 mass% was introduced. The liquid 5e was introduced into the introduction part 25 at a flow rate of 0.001 µL/min, and a polymerization reaction of the monomers was performed at a polymerization reaction temperature (temperature of the heater 20) of 79 ± 2°C.

The step using the reactor 104 is the (third) additional polymerization step according to the method for producing a polymer of the embodiment described above.

The flow path width of each of the conduits that connect the respective reactors, such as the conduit 60c, was set to 0.26 mm.

A copolymer of methyl methacrylate and phenyl methacrylate (random copolymer) was produced using the polymer production system described above.

### Example 6

A polymer production system adopted in this Example to produce a polymer is the polymer production system illustrated in FIG. 2 as in Example 1 described above.

For the reactor 101, the flow path widths of the first flow path 2 and the first introduction flow path 3 were set to 100 µm, the flow path length from the introduction part 25 to the discharge port 22 of the first flow path 2 was set to 1600 mm (flow path volume: 33.0 µL), and syringe pumps YSP-301 (manufactured by YMC CO., LTD.) were used as the liquid feeding pumps 40a and 40b. To the raw material tank 30a, a liquid (liquid 6a, solvent concentration; 60.0 mass%) containing dimethyl-2,2-azobis(2-methylpropionate) (V-601; manufactured by FUJIFILM Wako Pure Chemical Corporation; polymerization initiator) dissolved in propylene glycol monomethyl ether acetate (MMPGAC; manufactured by FUJIFILM Wako Pure Chemical Corporation; boiling point: 145°C, melting point: lower than -10°C, specific gravity: 0.97; solvent) such that the concentration of the radical polymerization initiator was 40.0 mass% was introduced. To the raw material tank 30b, a liquid (liquid 6b, solvent concentration; 68.67 mass%) containing methyl methacrylate (MMA; manufactured by FUJIFILM Wako Pure Chemical Corporation; boiling point: 101°C, melting point: -48°C, specific gravity: 0.94) and phenyl methacrylate (PhMA; manufactured by FUJIFILM Wako Pure Chemical Corporation; boiling point: 198°C, melting point: -17°C, specific gravity: 1.06) dissolved in propylene glycol monomethyl ether acetate (the same as MMPGAC described above) such that the concentration of methyl methacrylate was 14.19 mass% and the concentration of phenyl methacrylate was 17.15 mass% was introduced. The liquid 6a and the liquid 6b were introduced into the introduction part 25 at flow rates of 1.18 µL/min and 1.74 µL/min, respectively, and a polymerization reaction of the monomers was performed at a polymerization reaction temperature (temperature of the heater 20) of 75 ± 2°C.

The step using the above reactor 101 is the polymerization step according to the method for producing a polymer according to the embodiment described above.

For the reactor 102, the flow path widths of the first flow path 2 and the first introduction flow path 3 were set to 100 µm, the flow path length from the introduction part 25 to the discharge port 22 of the first flow path 2 was set to 2197 mm (flow path volume: 45.5 µL), and a syringe pump YSP-301 (manufactured by YMC CO., LTD.) was used as the liquid feeding pump 40b. To the raw material tank 30b, a liquid (liquid 6c, solvent concentration; 79.0 mass%) containing methyl methacrylate (MMA; manufactured by FUJIFILM Wako Pure Chemical Corporation; boiling point: 101°C, melting point: -48°C, specific gravity: 0.94) and phenyl methacrylate (PhMA; manufactured by FUJIFILM Wako Pure Chemical Corporation; boiling point: 198°C, melting point: -17°C, specific gravity: 1.06) dissolved in propylene glycol monomethyl ether acetate (the same as MMPGAC described above) such that the concentration of methyl methacrylate was 8.0 mass% and the concentration of phenyl methacrylate was 13.0 mass% was introduced. The liquid 6c was introduced into the introduction part 25 at a flow rate of 0.74 µL/min, and a polymerization reaction of the monomers was performed at a polymerization reaction temperature (temperature of the heater 20) of 70 ± 2°C.

The step using the reactor 102 is the (first) additional polymerization step according to the method for producing a polymer of the embodiment described above.

For the reactor 103, the flow path widths of the first flow path 2 and the first introduction flow path 3 were set to 100 µm, the flow path length from the introduction part 25 to the discharge port 22 of the first flow path 2 was set to 2604 mm (flow path volume: 54.0 µL), and a syringe pump YSP-301 (manufactured by YMC CO., LTD.) was used as the liquid feeding pump 40b. To the raw material tank 30b, a liquid (liquid 6d, solvent concentration; 79.00 mass%) containing methyl methacrylate (MMA; manufactured by FUJIFILM Wako Pure Chemical Corporation; boiling point: 101°C, melting point: -48°C, specific gravity: 0.94) and phenyl methacrylate (PhMA; manufactured by FUJIFILM Wako Pure Chemical Corporation; boiling point: 198°C, melting point: -17°C, specific gravity: 1.06) dissolved in propylene glycol monomethyl ether acetate (the same as MMPGAC described above) such that the concentration of methyl methacrylate was 8.0 mass% and the concentration of phenyl methacrylate was 13.0 mass% was introduced. The liquid 6d was introduced into the introduction part 25 at a flow rate of 0.001 µL/min, and a polymerization reaction of the monomers was performed at a polymerization reaction temperature (temperature of the heater 20) of 70 ± 2°C.

The step using the reactor 103 is the (second) additional polymerization step according to the method for producing a polymer of the embodiment described above.

For the reactor 104 (in FIG. 2, the reactor 10N, where N equals to 4), the flow path widths of the first flow path 2 and the first introduction flow path 3 were set to 100 µm, the flow path length from the introduction part 25 to the discharge port 22 of the first flow path 2 was set to 2895 mm (flow path volume: 60.0 µL), and a syringe pump YSP-301 (manufactured by YMC CO., LTD.) was used as the liquid feeding pump 40b. To the raw material tank 30b, a liquid (liquid 6e, solvent concentration; 79.00 mass%) containing methyl methacrylate (MMA; manufactured by FUJIFILM Wako Pure Chemical Corporation; boiling point: 101°C, melting point: -48°C, specific gravity: 0.94) and phenyl methacrylate (PhMA; manufactured by FUJIFILM Wako Pure Chemical Corporation; boiling point: 198°C, melting point: -17°C, specific gravity: 1.06) dissolved in propylene glycol monomethyl ether acetate (the same as MMPGAC described above) such that the concentration of methyl methacrylate was 8.0 mass% and the concentration of phenyl methacrylate was 13.0 mass% was introduced. The liquid 6e was introduced into the introduction part 25 at a flow rate of 0.69 µL/min, and a polymerization reaction of the monomers was performed at a polymerization reaction temperature (temperature of the heater 20) of 68 ± 2°C.

The step using the reactor 104 is the (third) additional polymerization step according to the method for producing a polymer of the embodiment described above.

The flow path width of each of the conduits that connect the respective reactors, such as the conduit 60c, was set to 0.26 mm.

A copolymer of methyl methacrylate and phenyl methacrylate (random copolymer) was produced using the polymer production system described above.

### Measurement of Polydispersity Mw/Mn

The weight-average molecular weight Mw and the number-average molecular weight Mn of the polymers were measured by gel permeation chromatography (GPC) to calculate the polydispersity Mw/Mn. The measurement conditions of GPC are as described below.
Apparatus: GPC system (manufactured by Shimadzu Corporation)
System controller: SIL-20A (manufactured by Shimadzu Corporation)
Pump: LC-20AD (manufactured by Shimadzu Corporation)
Degasser: DGU-20A3R (manufactured by Shimadzu Corporation)
Column oven: CTO-20AC (manufactured by Shimadzu Corporation)
RI detector: RID-20A (manufactured by Shimadzu Corporation)
Column: three columns of GPC KF-806L (column size: 8.0 mm (ID) × 300 mm (L), manufactured by Resonac Corporation)
Guard column: KF-G4A (column size: 4.6 mm (ID) × 10 mm (L), manufactured by Resonac Corporation)
Column temperature: 40°C
Cell temperature: 40°C
Eluent: tetrahydrofuran
Eluent flow rate: 0.8 mL/min
Injection amount: 35 µL
Analysis time: 60 minutes
Sample: 5 wt.% tetrahydrofuran solution
Sample for preparing calibration curve: polystyrene calibration kit S-M-10 (manufactured by Agilent Technologies)

The measurement results are shown in Table 1.

### Calculation of Dispersity σ²

Mₖᵢ, Mₖₐ, M_{kf}, Iₖᵢ, Iₖₐ, and I_{kf} are defined as follows.
- Mₖᵢ: total amount in moles of the monomers contained in the liquid at the start of the k-th additional polymerization step
- Mₖₐ: total amount in moles of the monomers added in the k-th additional polymerization step
- M_{kf}: total amount in moles of the monomers contained in the liquid at the end of the k-th additional polymerization step
- Iₖᵢ: total amount in moles of the polymerization initiator contained in the liquid at the start of the k-th additional polymerization step
- Iₖₐ: total amount in moles of the polymerization initiator added in the k-th additional polymerization step
- I_{kf}: total amount in moles of the polymerization initiator contained in the liquid at the end of the k-th additional polymerization step

First, Mₖₐ and Iₖₐ are numerical values determined by the amount of a monomer to be additionally added.

Subsequently, in each of this Examples, a radical polymerization initiator was used as the polymerization initiator, and thus M_{kf} and I_{kf} were numerical values calculated from the following formula.
- ${M}_{kf} = \left[{M}_{ki}\right] - {k}_{p} \times \left(2 {k}_{d}\times f/{k}_{t}\right) 0.5 \times \left[{I}_{ki}\right] \times {k}_{d} \times \left[{I}_{ki}\right] 0.5 \times \left[{M}_{ki}\right] \times {t}_{k}$
- ${I}_{kf} = \left[{I}_{ki}\right] - {k}_{d} \times \left[{I}_{ki}\right] \times {t}_{k}$
- k_{d}: Initiator decomposition rate constant (a numerical value described in documents such as manufacturer's catalogs was used)
- f: Initiator efficiency (a numerical value described in documents such as manufacturer's catalogs was used)
- kₚ: Growth reaction rate constant (a numerical value described in documents such as Polymer Handbook was used)
- kₜ: Stop reaction toxicity constant (a value described in documents such as Polymer Handbook was used)
- tₖ: Reaction time of k-th additional polymerization step

Next, in this Examples, another process is not included between the polymerization step and each additional polymerization step. Thus, for example, the total amount in moles of the monomers contained in the liquid at the start of the second additional polymerization step is the same as the total amount in moles of the monomers contained in the liquid at the end of the first additional polymerization step. That is, Mₖᵢ and Iₖᵢ are as follows.
- ${M}_{ki} = {M}_{k - 1 f}$
- ${I}_{ki} = {I}_{k - 1 f}$

Mₖᵢ, that is, M_{0f} is the total amount in moles of the monomers contained in the liquid at the end of the polymerization step, and can be calculated by the same method for M_{kf} described above. Mₖᵢ in this case is the total amount in moles of the monomers charged in the polymerization step. Similarly, Iₖᵢ, that is, I_{0f} is the total amount in moles of the polymerization initiator contained in the liquid at the end of the polymerization step, and can be calculated by the same method for I_{kf} described above. Iₖᵢ in this case is the total amount in moles of the polymerization initiator charged in the polymerization step.

From Mₖᵢ, Mₖₐ, M_{kf}, Iₖᵢ, Iₖₐ, and I_{kf} described above, a ratio R represented by Formula R shown below can be calculated.
- $R = M / I$
- $M = {M}_{ki} + {M}_{ka} - {M}_{kf}$
- ${I}_{ki} + {I}_{ka} - {I}_{kf}$

The dispersity σ² calculated from Formula (1) shown below was calculated using Formula R.
[Math. 3] ${σ}^{2} = \frac{1}{n} {\sum }_{i = 1}^{n} {\left({x}_{i}-{x}^{˜}\right)}^{2}$
*xᵢ* : Ratio R in i-th additional polymerization step
*x̃* : Average value of ratio R in respective additional polymerization steps up to n-th additional polymerization step.

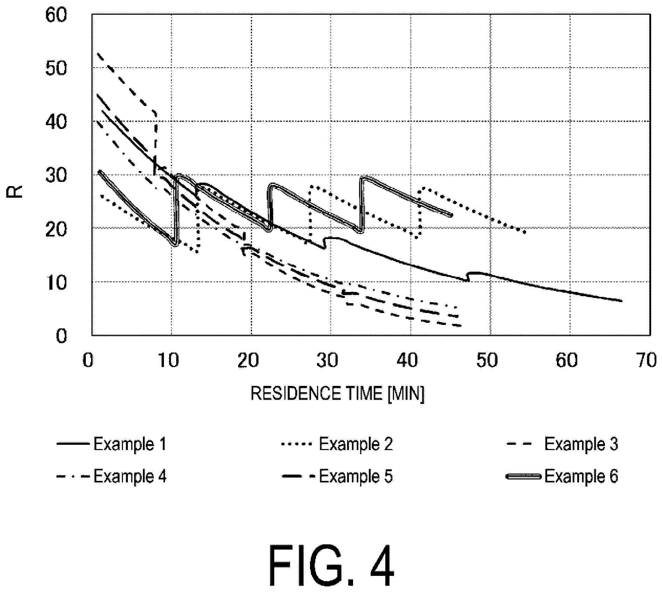

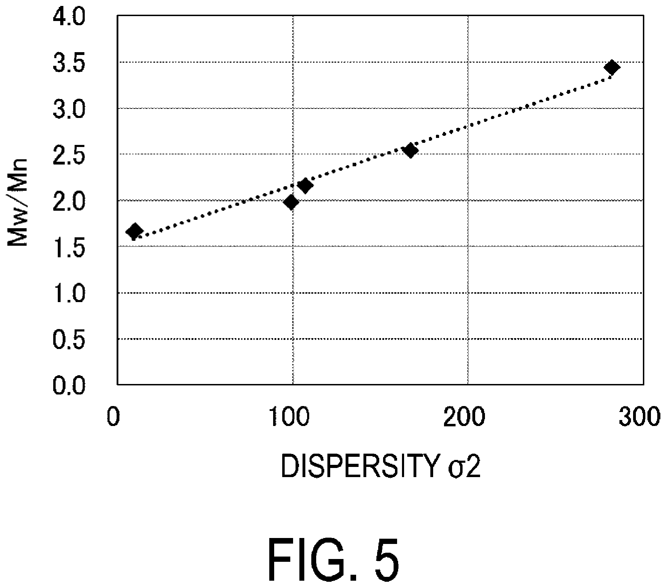

The calculation results are shown in Table 1. FIG. 4 shows a graph created with the ratio R as the vertical axis and the residence time as the horizontal axis, where the time at which the monomers were charged into the reactor in the polymerization step was defined as 0 minute, and the time during which the liquid containing the monomers was retained in the reaction system is defined as the residence time. In this figure, the portion where the ratio R increases with respect to the increase in the residence time represents the timing at which the monomers were additionally added. FIG. 5 shows a graph created with the polydispersity on the vertical axis and the dispersity σ² on the horizontal axis.

### [Table 1]

**Table 1**

| | Total residence time min | Final outlet Mw | Final outlet Mn | Polydispersity Mw/Mn | Dispersity σ² |
|---|---|---|---|---|---|
| Example 1 (experimental value) | 66.4 | 7281 | 3683 | 1.98 | 99 |
| Example 2 (experimental value) | 54.4 | 6246 | 3772 | 1.66 | 9 |
| Example 3 (simulation) | 46.5 | 7577 | 2202 | 3.44 | 282 |
| Example 4 (simulation) | 45.6 | 7458 | 3453 | 2.16 | 107 |
| Example 5 (simulation) | 45.8 | 7586 | 2984 | 2.54 | 167 |
| Example 6 (simulation) | 45.0 | 7996 | 4795 | 1.67 | 10 |

It can be seen from Table 1 that the polydispersity Mw/Mn of the polymer can be controlled in the method for producing a polymer according to the embodiment described above, specifically, by adding the monomer in the additional polymerization step while controlling the addition amount of the additive component, particularly while controlling the ratio R. Further, it can be seen that a polymer having a small polydispersity Mw/Mn can be obtained by setting the dispersity σ² to 100 or less.

### [M/I Ratio]

M/I ratio in the introduction part 25 of each reactor for Examples 1 to 6 is shown in Table 2. For each of Examples 1 to 6, the ratio of the maximum M/I ratio in the introduction parts 25 in the respective reactors 10 other than the reactor 10 disposed most upstream to the M/I ratio in the introduction part 25 of the reactor 10 disposed most upstream ((maximum M/I ratio)/(most upstream M/I ratio)) is also shown in Table 2.

### [Table 2]

**Table 2**

| | M/I ratio in introduction part | | | | Ratio of (Maximum M/I ratio)/(most upstream M/I) |
|---|---|---|---|---|---|
| | Reactor 101 | Reactor 102 | Reactor 103 | Reactor 104 | |
| Example 1 | 4.4 | 3.1 | 2.1 | 1.3 | 0.71 |
| Example 2 | 2.6 | 3.2 | 3.7 | 4.0 | 1.52 |
| Example 3 | 3.4 | 2.7 | 1.6 | 0.7 | 0.78 |
| Example 4 | 3.3 | 2.3 | 1.4 | 0.8 | 0.70 |
| Example 5 | 3.4 | 2.5 | 1.5 | 0.8 | 0.73 |
| Example 6 | 2.1 | 1.8 | 1.2 | 1.3 | 0.84 |

### Reference Signs List

2b Reaction flow path
10 Reactor
20 Heater (example of reaction acceleration means)
100 Polymer production system

## Claims

1. A method for producing a polymer, the method comprising:
a polymerization step including a polymerization treatment of subjecting a polymerization initiator and a monomer to a polymerization reaction in a liquid to yield a polymerization reaction product; and
an additional polymerization step of adding an additive component to cause an additional polymerization reaction, the additional polymerization step being performed at least once,
wherein
the additive component includes at least one selected from the group consisting of a monomer and a polymerization initiator, and
addition of the additive component is performed while controlling an addition amount of the additive component.

2. The method for producing a polymer according to claim 1, wherein the addition amount of the additive component is on a molar basis.

3. The method for producing a polymer according to claim 1, wherein
when the additional polymerization step is performed n times (where, n is 1 or more), the k-th (where, k is 1 or more and n or less) additional polymerization step is performed by treating the liquid containing the polymerization reaction product obtained in the polymerization step (when k equals to 1) or the liquid containing the polymerization reaction product obtained in the (k - 1)-th additional polymerization step (when k is 2 or more), and
addition of the additive component in the k-th additional polymerization step is performed while controlling Mₖᵢ, Mₖₐ, M_{kf}, Iₖᵢ, Iₖₐ, and I_{kf}:
Mₖᵢ: a total amount in moles of the monomer contained in the liquid at the start of the k-th additional polymerization step;
Mₖₐ: a total amount in moles of the monomer added in the k-th additional polymerization step;
M_{kf}: a total amount in moles of the monomer contained in the liquid at the end of the k-th additional polymerization step;
Iₖᵢ: a total amount in moles of the polymerization initiator contained in the liquid at the start of the k-th additional polymerization step;
Iₖₐ: a total amount in moles of the polymerization initiator added in the k-th additional polymerization step; and
I_{kf}: a total amount in moles of the polymerization initiator contained in the liquid at the end of the k-th additional polymerization step;
where the sum of Mₖₐ and Iₖₐ is not 0 mol, Mₖₐ is 0 mol or more, and Iₖₐ is 0 mol or more.

4. The method for producing a polymer according to claim 3, wherein, in the additional polymerization step, the addition of the additive component in the k-th additional polymerization step is performed while further controlling M represented by Formula M using Mₖᵢ, Mₖₐ, and M_{kf}: $M = {M}_{ki} + {M}_{ka} - {M}_{kf} .$

5. The method for producing a polymer according to claim 3 or 4, wherein, in the additional polymerization step, the addition of the additive component in the k-th additional polymerization step is performed while further controlling I represented by Formula I shown below using Iₖᵢ, Iₖₐ, and I_{kf}: $I = {I}_{ki} + {I}_{ka} - {I}_{kf} .$

6. The method for producing a polymer according to claim 3 or 4, wherein, in the additional polymerization step, the addition of the additive component in the k-th additional polymerization step is performed while further controlling a ratio R represented by Formula R using M represented by Formula M and I represented by the Formula I: $R = M / I$ $M = {M}_{ki} + {M}_{ka} - {M}_{kf}$ $I = {I}_{ki} + {I}_{ka} - {I}_{kf} .$

7. The method for producing a polymer according to claim 6, wherein, in the additional polymerization step, the ratio R is controlled to satisfy Condition (1):
Condition (1): a dispersity σ² calculated from Formula σ² shown below is 300 or less:
[Math. 1] ${σ}^{2} = \frac{1}{n} {\sum }_{i = 1}^{n} {\left({x}_{i}-{x}^{˜}\right)}^{2}$
*xᵢ* : Ratio R in i-th additional polymerization step
*x̃* : Average value of ratio R in respective additional polymerization steps up to n-th additional polymerization step.

8. The method for producing a polymer according to claim 1 or 2, wherein at least two types of monomers are used as the monomer used in the polymerization step.

9. The method for producing a polymer according to claim 1 or 2, wherein at least one monomer selected from the group consisting of a (meth)acryloyl group-containing polymerizable monomer, an isocyanate group-containing polymerizable monomer, a carboxyl group-containing polymerizable monomer, a hydroxyl group-containing polymerizable monomer, an epoxy group-containing polymerizable monomer, an oxazoline group-containing polymerizable monomer, a maleimide group-containing polymerizable monomer, an amino group-containing polymerizable monomer, a styrene-based monomer, a fluorine-containing vinyl monomer, a silicon-containing vinyl-based monomer, a vinyl ester-based monomer, a diene-based monomer, vinyl chloride, vinylidene chloride, allyl chloride, and vinyl ethyl ether is used as the monomer used in the polymerization step.

10. The method for producing a polymer according to claim 1 or 2, wherein when the monomer is added as the additive component in any of the additional polymerization steps up to the n-th additional polymerization step, the type of the monomer in any of the additional polymerization steps and the type of the monomer used in the polymerization step at least partially overlap with each other.

11. The method for producing a polymer according to claim 1 or 2, wherein when the polymerization initiator is added as the additive component in any of the additional polymerization steps up to the n-th additional polymerization step, the polymerization initiator in any of the additional polymerization steps and the polymerization initiator used in the polymerization step are radical polymerization initiators.

12. The method for producing a polymer according to claim 1 or 2, wherein at least one step selected from the group consisting of the polymerization step and the additional polymerization step performed at least once is performed using a vessel including a reaction flow path for allowing the polymerization reaction of the monomer to proceed.

13. The method for producing a polymer according to claim 12, wherein the vessel is a microfluidic reactor, and the reaction flow path is a micro flow path.

14. A method for producing a composition, the method comprising yielding the composition using the polymer produced by the method for producing a polymer described in claim 1.

15. A method for producing a molded article, the method comprising molding the polymer produced by the method for producing a polymer described in claim 1 or the composition produced by the method for producing a composition described in claim 14.
